# EUROPEAN PATENT APPLICATION

(11) **EP 4 462 237 A1**
(43) Date of publication of application: **13.11.2024**
(21) Application number: 23765944.6
(22) Date of filing: 06.03.2023
(51) Int. Cl.: G06F 3/0481

(54) **DISPLAY METHOD AND DEVICE**

(30) Priority: 09.03.2022 CN 202210232720
(71) Applicant: Huawei Technologies Co., Ltd., Shenzhen, Guangdong 518129 (CN)
(72) Inventor: XU, Jie, Shenzhen, Guangdong 518129 (CN); ZHANG, Ru, Shenzhen, Guangdong 518129 (CN)
(74) Representative: Körber, Martin Hans
(86) International application number: PCT/CN2023/079869
(87) International publication number: WO 2023/169366

(57) **Abstract**

This application provides a display method and a device. The method includes: An electronic device displays a first interface in a first region of a display; the electronic device receives a first operation; and in response to the first operation, the electronic device displays a second interface in a second region of the display, and displays a third interface in a third region of the display, where reminder tags corresponding to one or more schedule items are displayed on the third interface. The second region and the first region have a same central point, the third region is a ring region surrounding a periphery of the second region, and the third region does not overlap the second region. By using the method, an interaction interface for viewing all-day schedule information more quickly, more conveniently, and more comprehensively may be provided for a user, so that the user can properly arrange time, and simultaneously, the user is provided with easier operations and more user-friendly interaction experience.

## Description

This application claims priority to Chinese Patent Application No. 2022102327205, filed with the China National Intellectual Property Administration on March 9, 2022 and entitled "DISPLAY METHOD AND DEVICE", which is incorporated herein by reference in its entirety.

### TECHNICAL FIELD

This application relates to the field of electronic device technologies, and in particular, to a display method and a device.

### BACKGROUND

In recent years, with rapid development of a mobile terminal, more functions such as a voice communication function, a camera function, a multimedia player function, and a payment function are integrated into an electronic device.

As the pace of life is accelerating and people's schedules are increasing, there is an increasing demand for methods of managing and notifying schedules. A smartwatch is an electronic device that can be carried by a user. How to view schedule information on the smartwatch conveniently, quickly, and comprehensively is an urgent problem to be resolved.

### SUMMARY

This application provides a display method and a device, to provide an interaction interface for a user to view all-day schedule information more quickly, conveniently, and comprehensively, so that the user can properly arrange time.

According to a first aspect, this application provides a display method. The method includes: An electronic device displays a first interface in a first region of a display; the electronic device receives a first operation; and in response to the first operation, the electronic device displays a second interface in a second region of the display, and displays a third interface in a third region of the display, where reminder tags corresponding to one or more schedule items are displayed on the third interface. The second region and the first region have a same central point, the third region is a ring region surrounding a periphery of the second region, and the third region does not overlap the second region.

The electronic device is a wearable device like a smartwatch or a Bluetooth watch. A shape of the display of the electronic device is any one of a circle, an ellipse, a square, a rectangle, a diamond, or a trapezoid.

The first operation may be a pinch-in operation that is performed on the first interface (for example, a pinch-in operation that is performed with two fingers on the first interface), or the first operation is an operation performed on a crown of the electronic device (for example, a rotation operation performed on the crown of the electronic device).

The schedule item may include a to-do list, travel information, meeting information, a weather condition, reminder information, group meals information, and the like. Display forms of the reminder tags corresponding to the one or more schedule items include but are not limited to a graphic element, brightness, a color, a shape, a size, shadow, a transparency, and the like. The graphic element includes but is not limited to an arc line, a geometric pattern, a slash, and the like.

Optionally, the first region is a complete display region of the display of the electronic device 100. The first region includes the second region and the third region.

According to the method provided in the first aspect, an interaction interface for viewing all-day schedule information more quickly, more conveniently, and more comprehensively may be provided for a user, so that the user can properly arrange time, and simultaneously, the user is provided with easier operations and more user-friendly interaction experience.

With reference to the first aspect, in a possible implementation, that reminder tags corresponding to one or more schedule items are displayed on the third interface specifically includes: Reminder tags corresponding to one or more schedule items on a first date are displayed on a first ring and/or a second ring of the third interface.

Optionally, in some embodiments, the electronic device 100 may not display the first ring and/or the second ring, but directly display a schedule item in one day at a corresponding location in a form of a schedule tag based on time corresponding to each schedule item. In this way, the user may directly view one or more schedule items in one day through the first ring and/or the second ring.

With reference to the first aspect, in a possible implementation, that reminder tags corresponding to one or more schedule items on a first date are displayed on a first ring and/or a second ring of the third interface specifically includes: Reminder tags corresponding to one or more schedule items from 00:00 to 12:00 on the first date are displayed on the first ring of the third interface; and/or reminder tags corresponding to one or more schedule items from 12:00 to 24:00 on the first date are displayed on the second ring of the third interface. In this way, schedule items in one day are divided into task items in two time periods based on time, to help the user view the schedule items in one day.

With reference to the first aspect, in a possible implementation, a display location of the reminder tag corresponding to the schedule item on the first ring and/or the second ring indicates time corresponding to the schedule item. The time corresponding to the schedule item includes start time and end time. In this way, the user cannot only view the one or more schedule items in one day, but also intuitively view start time and end time of each schedule item, so that the user can view an interaction interface of all-day schedule information more conveniently and more comprehensively, to help the user properly arrange time.

Optionally, the electronic device may display a timescale on the display to help the user view the time (the start time or the end time) corresponding to the schedule item displayed on the first ring and/or the second ring. In this way, the user may clearly view, through the timescale, duration occupied by the schedule item.

With reference to the first aspect, in a possible implementation, content displayed on the second interface is the same as content displayed on the first interface, and a size of the second interface is less than a size of the first interface. Alternatively, content displayed on the second interface is different from content displayed on the first interface, and a size of the second interface is less than a size of the first interface.

With reference to the first aspect, in a possible implementation, display forms of reminder tags corresponding to different types of schedule items are different, and the display forms of the reminder tags include one or more of the following elements: a graph, brightness, a color, a shape, a size, a shadow, and transparency. In this way, the user may intuitively observe which types of schedule items currently exist.

Optionally, display forms of schedule items of the same type but different events may also be different. In this way, the user may intuitively observe relatively important schedule information.

With reference to the first aspect, in a possible implementation, the reminder tags corresponding to the one or more schedule items include a first reminder tag corresponding to a first schedule item; and after that the electronic device displays a third interface in a third region of the display, the method further includes: The electronic device receives a second operation for the first reminder tag; and the electronic device displays, in the second region of the display in response to the second operation, first schedule information corresponding to the first schedule item.

The second operation may be a tap operation for the first reminder tag.

In this way, the reminder tag on the first ring and/or the second ring may receive a trigger operation of the user, and detailed content of the schedule item corresponding to the reminder tag is displayed on the display.

With reference to the first aspect, in a possible implementation, the second interface includes options of the one or more schedule items, and the options of the one or more schedule items include a first option corresponding to the first schedule item; and after that the electronic device displays a third interface in a third region of the display, the method further includes: The electronic device receives a third operation for the first option; and the electronic device displays, in the second region of the display in response to the third operation, first schedule information corresponding to the first schedule item.

The third operation may be a tap operation for the first option (for example, a tap operation of the user for the first option is received through a touchscreen), or the third operation may be an operation of operating the crown (for example, pressing the crown).

In this way, one or more schedule items displayed on a watch face may receive a trigger operation of the user, and detailed content of the schedule item is displayed on the display.

With reference to the first aspect, in a possible implementation, after that the electronic device displays a third interface in a third region of the display, the method further includes: The electronic device receives a fourth operation; and the electronic device displays a fourth interface in the third region of the display in response to the fourth operation, where reminder tags corresponding to one or more schedule items on a second date are displayed on a first ring and/or a second ring of the fourth interface, and the second date is one day before or after the first date.

The fourth operation may be a two-finger slide operation performed on any region of the display, or the fourth operation may be a single-finger slide operation performed on the third region.

In this way, the user may control the electronic device to display schedule tags corresponding to one or more schedule items on different dates.

With reference to the first aspect, in a possible implementation, after that the electronic device displays a fourth interface in a third region of the display, the method further includes: The electronic device displays first prompt information, where the first prompt information is used to prompt that the reminder tags are the reminder tags corresponding to the one or more schedule items on the second date. In this way, the electronic device outputs the first prompt information, to avoid that after switching a date, the user does not know a specific date on which reminder tags corresponding to one or more schedule items are displayed in the third region.

With reference to the first aspect, in a possible implementation, after that the electronic device displays a third interface in a third region of the display, the method further includes: the electronic device receives a fifth operation; the electronic device displays a month view in the first region or the second region in response to the fifth operation, where the month view displays identifiers of a plurality of dates; and the electronic device receives and responds to an input operation for an identifier of a third date on the month view, and the electronic device displays a fifth interface in the third region of the display, where reminder tags corresponding to one or more schedule items on the third date are displayed on a first ring and/or a second ring of the fifth interface. In this way, the user can quickly select any date, so that the electronic device displays, in the third region, reminder tags corresponding to one or more schedule items on the date selected by the user, to improve operation efficiency of the user.

With reference to the first aspect, in a possible implementation, after that the electronic device receives a fifth operation, the method further includes:
the electronic device displays a sixth interface or the first interface in the second region of the display, where the sixth interface includes options of the one or more schedule items on the third date. In this way, after the user selects a specific date, the first interface may be displayed in a display region (namely, the second region) in which the watch face is located, or a schedule information list on the date selected by the user may be displayed.

With reference to the first aspect, in a possible implementation, after that the electronic device displays a third interface in a third region of the display, the method further includes: The electronic device receives a sixth operation; and in response to the sixth operation, the electronic device stops displaying the third interface in the third region of the display, and displays the first interface in the first region.

The sixth operation is an operation of enabling the electronic device to stop displaying the first ring and/or the second ring. The sixth operation may be a pinch-out operation that is performed on the first interface (for example, a pinch-out operation that is performed with two fingers on the first interface), or the sixth operation is an operation performed on the crown of the electronic device (for example, a rotation operation performed on the crown of the electronic device). In the sixth operation and the first operation, the crown is rotated in opposite directions.

According to a second aspect, an embodiment of this application provides an electronic device. The electronic device includes one or more processors and one or more memories. The one or more memories are coupled to the one or more processors, the one or more memories are configured to store computer program code, the computer program code includes computer instructions, and the one or more processors invoke the computer instructions, so that the electronic device performs the display method provided in the first aspect.

According to a third aspect, an embodiment of this application provides an electronic device, and a computer-readable storage medium, configured to store computer instructions. When the computer instructions are run on an electronic device, the electronic device is enabled to perform the display method provided in the first aspect.

According to a fourth aspect, an embodiment of this application provides a computer program product. When the computer program product is run on an electronic device, the electronic device is enabled to perform the display method provided in the first aspect.

For beneficial effects of the second aspect to the fourth aspect, refer to beneficial effects of the first aspect. Details are not described again in embodiments of this application.

### BRIEF DESCRIPTION OF DRAWINGS

FIG. 1A(a) to FIG. 1A(e) are a diagram of an example of a group of UIs for viewing schedule information according to an embodiment of this application;
FIG. 1B(a) to FIG. 1B(e) are a diagram of an example of another group of UIs for viewing schedule information according to an embodiment of this application;
FIG. 2A is a diagram of an example of a structure of an electronic device 100 (for example, a smartwatch) according to an embodiment of this application;
FIG. 2B is a diagram of an example of a hardware structure of an electronic device 100 according to an embodiment of this application;
FIG. 3A(a) to FIG. 3F are a group of diagrams of examples how an electronic device 100 displays a schedule tag corresponding to schedule information according to an embodiment of this application;
FIG. 3G is a diagram of an example of different display forms of schedule tags corresponding to different types of schedule information according to an embodiment of this application;
FIG. 3H is a diagram of an example of displaying only some schedule tags by an electronic device 100 according to an embodiment of this application;
FIG. 3I is a diagram of an example in which the electronic device 100 displays a plurality of schedule tags in an overlapping manner in a same time period according to an embodiment of this application;
FIG. 3J is a diagram of an example of displaying two partially overlapping schedule tags of different display forms according to an embodiment of this application;
FIG. 3K and FIG. 3L are diagrams of examples in which an electronic device 100 displays two partially overlapping schedule tags of a same display form according to an embodiment of this application;
FIG. 4A(a) to FIG. 4D are diagrams of examples of a group of UIs on which an electronic device 100 receives an operation 2 of a user and displays detailed content of a piece of specific schedule information according to an embodiment of this application;
FIG. 5A(a) to FIG. 5D(b) are diagrams of examples of a group of UIs for displaying schedule tags corresponding to schedule information on different dates on "dual rings" according to an embodiment of this application;
FIG. 5E and FIG. 5F are diagrams of examples of another group of UIs for displaying schedule tags corresponding to schedule information on different dates on "dual rings" according to an embodiment of this application;
FIG. 6A(a) to FIG. 6B are a group of diagrams of examples of displaying a month view by an electronic device 100 according to an embodiment of this application;
FIG. 7A and FIG. 7B are a group of diagrams of examples of stopping displaying a schedule tag corresponding to schedule information according to an embodiment of this application;
FIG. 8 is a diagram of an example of a functional module according to an embodiment of this application; and
FIG. 9 is a flowchart of an example of a method according to an embodiment of this application.

### DESCRIPTION OF EMBODIMENTS

The following clearly describes the technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following, the terms "first" and "second" are merely intended for a purpose of description, and shall not be understood as an indication or implication of relative importance or implicit indication of a quantity of indicated technical features. Therefore, a feature limited to "first" and "second" may explicitly or implicitly include one or more features. In descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form that can be accepted by the user. A user interface is source code that is written in a specific computer language like Java or an extensible markup language (extensible markup language, XML) and that is parsed and rendered on an electronic device and is finally presented as content that can be identified by the user. The user interface is usually in a representation form of a graphical user interface (graphical user interface, GUI), which is a user interface that is related to a computer operation and that is displayed in a graphical manner. The user interface may be a visual interface element like a text, an icon, a button, a menu, a tab, a text box, a dialog box, a status bar, a navigation bar, or a widget that is displayed on a display of the electronic device.

Currently, there are two manners of viewing schedule information on an electronic device 100.

Manner 1: The electronic device 100 starts a schedule application, and a user views the schedule information in the schedule application.

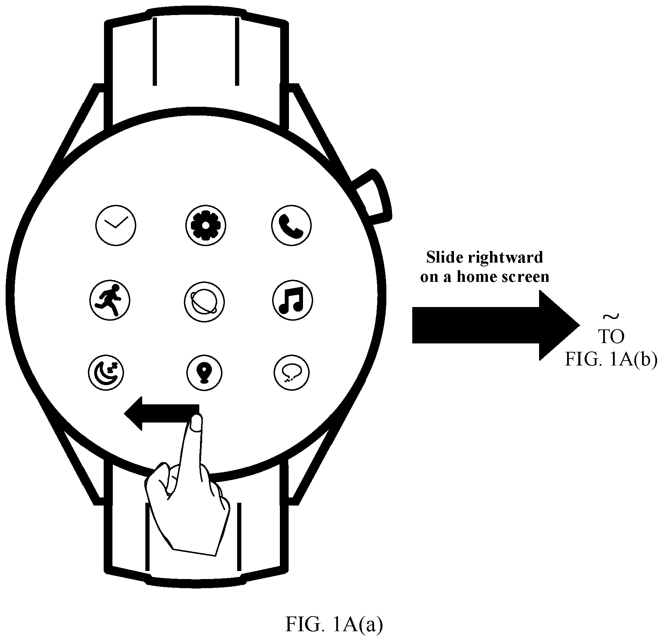

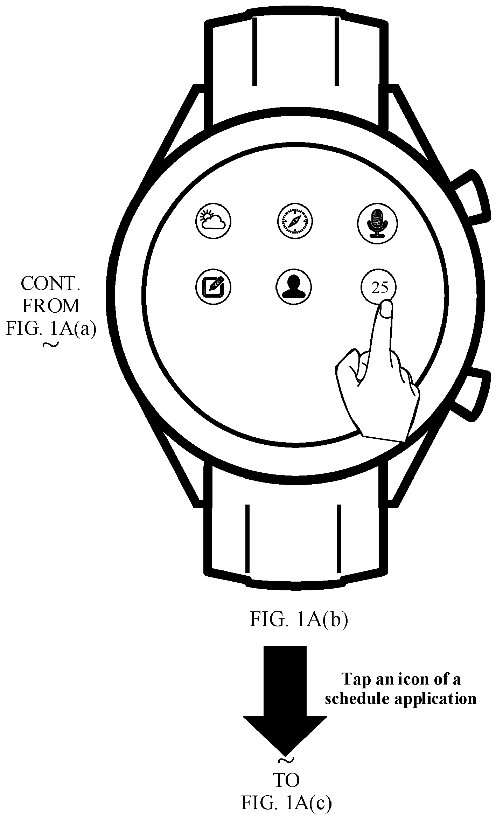

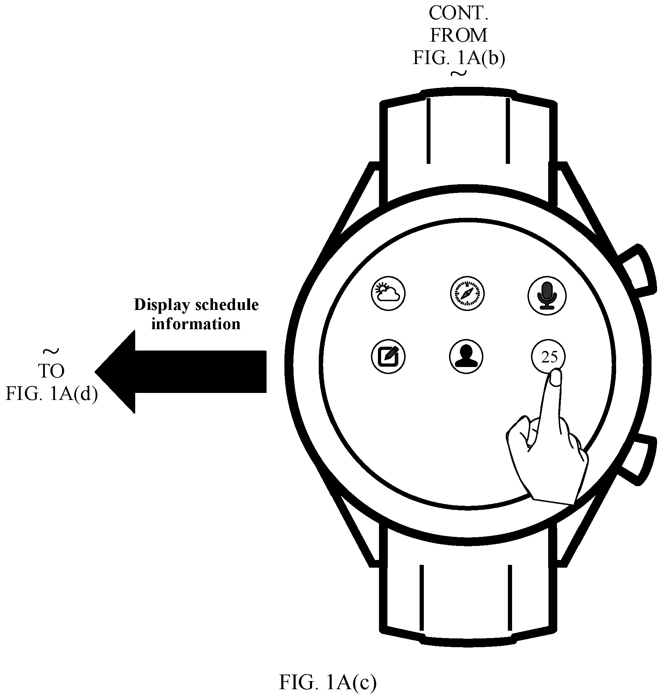

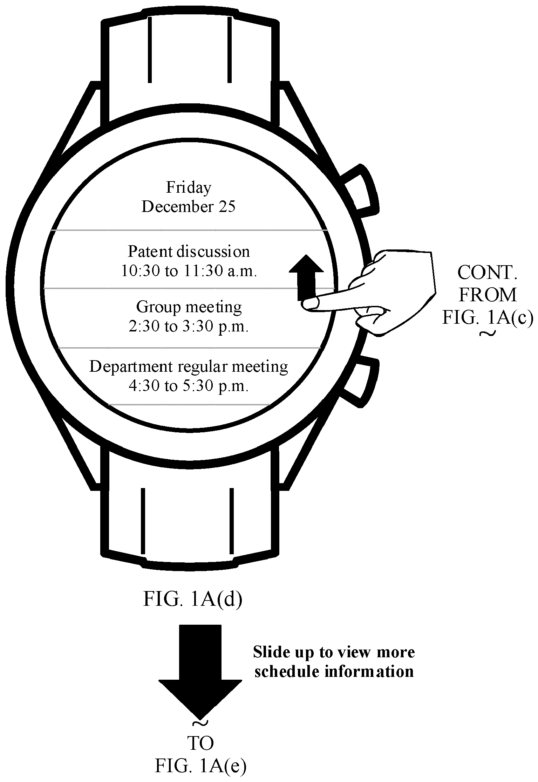

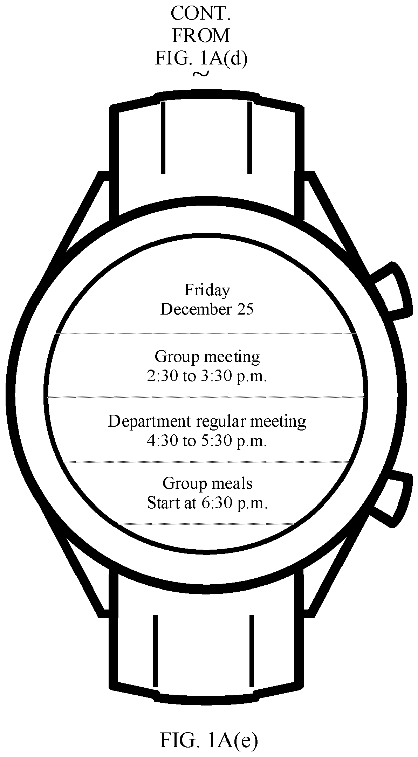

FIG. 1A(a) to FIG. 1A(e) are a diagram of an example of UIs for viewing schedule information in Manner 1.

As shown in FIG. 1A(a), the electronic device 100 may receive a slide operation (for example, a left slide operation) of the user for a display, to display an icon of another application. For example, FIG. 1A(a) shows icons of some applications, for example, an icon of a clock application, an icon of a settings application, an icon of a phone application, an icon of a health application, an icon of a browser application, an icon of a music application, an icon of a sleep application, an icon of a navigation application, and an icon of a messaging application. The user wants to search for an icon of the schedule application, but the icon of the schedule application is not displayed in FIG. 1A(a). The electronic device 100 may receive a right slide operation of the user for the display, and in response to the slide operation of the user, the electronic device 100 may display a user interface shown in FIG. 1A(b).

On the user interface shown in FIG. 1A(b), icons of applications different from those shown in FIG. 1A(a) are displayed, for example, an icon of a weather application, an icon of a compass application, an icon of a voice assistant application, an icon of a notepad application, an icon of a contacts application, and the icon of the schedule application.

Optionally, the user is not limited to sliding leftward once to find the icon of the schedule application. In another embodiment, the user may need to slide leftward a plurality of times to find the icon of the schedule application.

As shown in FIG. 1A(c), the electronic device 100 receives an input operation of the user for the icon of the schedule application, and in response to an output operation of the user, the electronic device 100 may display a user interface of the schedule application shown in FIG. 1A(d).

On the user interface of the schedule application shown in FIG. 1A(d), a date and some schedule information are displayed, and the date is Friday, December 25, 2021. Some schedule information is "patent discussion, 10:30 to 11:30 a.m.", "group meeting, 2:30 to 3:30 p.m.", and "department regular meeting, 4:30 to 5:30 p.m.".

Because a display region of the display of the electronic device 100 is limited, only some schedule information can be displayed. If the user wants to view other undisplayed schedule information, as shown in FIG. 1A(d), the electronic device 100 may receive a slide up operation of the user for the display to display the other undisplayed schedule information.

A difference between schedule information shown in FIG. 1A(e) and the schedule information shown in FIG. 1A(d) lies in that FIG. 1A(e) further shows schedule information that is not shown in FIG. 1A(d), for example, "group meals, start at 6:30 p.m.".

It can be learned from the operations shown in FIG. 1A(a) to FIG. 1A(e) that the user needs to perform operations several times to find the schedule application from a plurality of applications installed on the electronic device 100, and then view some schedule information in the schedule application. In addition, the display region of the electronic device 100 is limited, so that the electronic device 100 cannot display all the schedule information. The user needs to slide up and down on the display of the electronic device 100 to view all the schedule information. Therefore, user operations are complex.

Manner 2: A schedule application is found in a shortcut application of the electronic device 100, and then some schedule information is viewed in the schedule application.

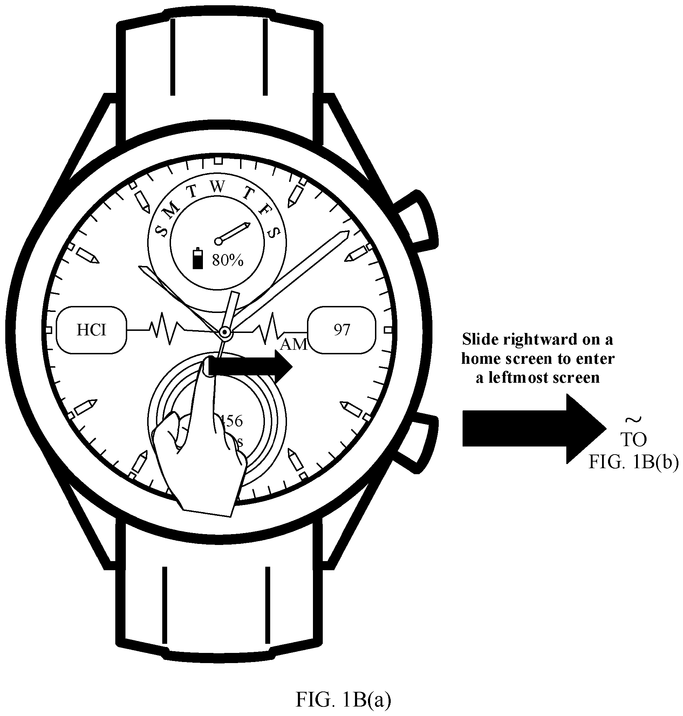

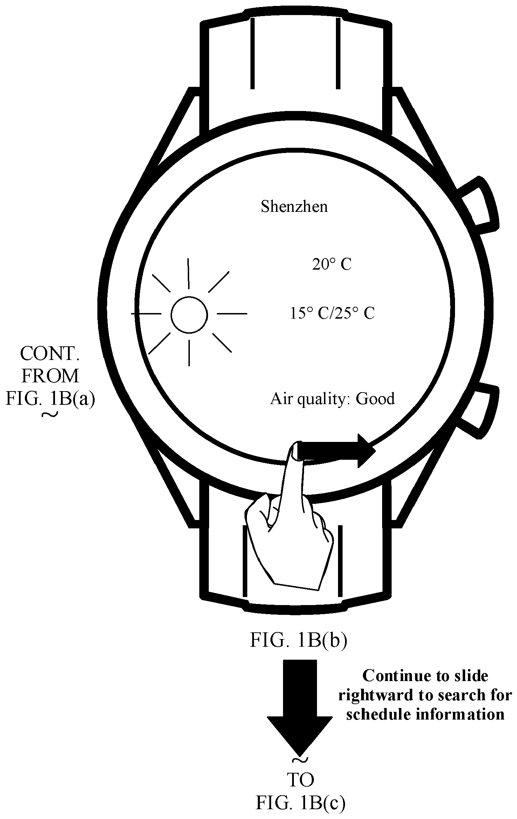

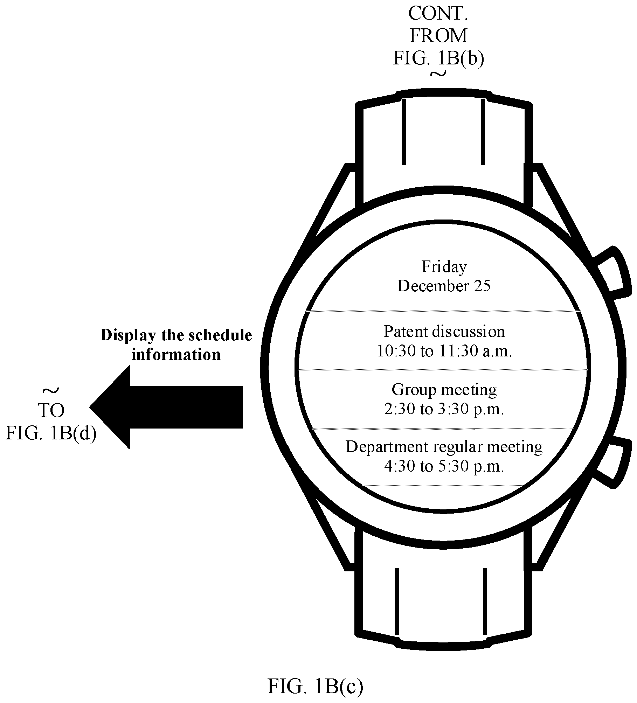

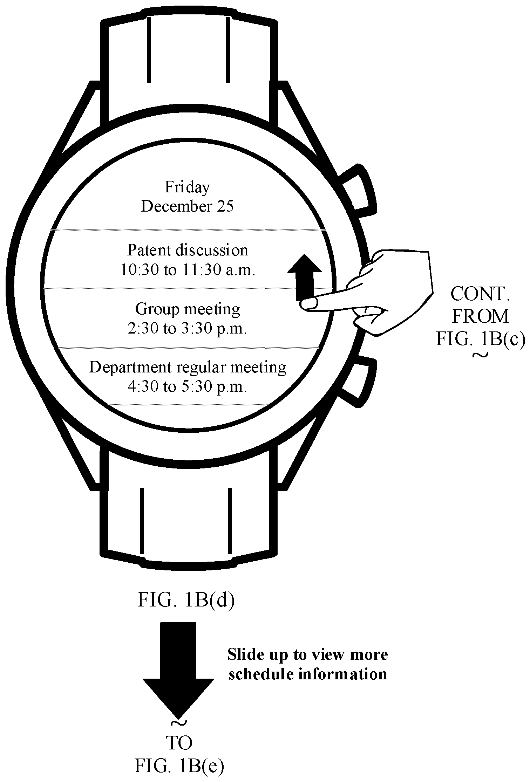

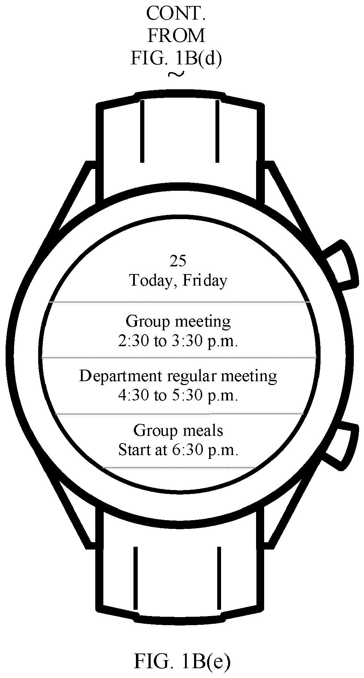

FIG. 1B(a) to FIG. 1B(e) are a diagram of an example of UIs for viewing schedule information in Manner 2.

A user can set a frequently used application as a shortcut application. In this way, the user can enter the shortcut application by using a shortcut. This saves time for searching for the application. The shortcut application may include a weather application, a health application, a phone application, and the like.

As shown in FIG. 1B(a), the electronic device 100 receives a right slide operation of the user for a display, and in response to the slide operation of the user, the electronic device 100 displays a user interface of the shortcut application.

FIG. 1B(b) shows an example of a user interface of the weather application. The user interface includes a location (for example, Shenzhen), a temperature (for example, 20° C), the lowest temperature today (for example, 15° C), the highest temperature today (for example, 25° C), and Today's air quality (for example, good).

As shown in FIG. 1B(b), the electronic device 100 receives a right slide operation of the user for the display, and the electronic device 100 displays a user interface of another shortcut application.

FIG. 1B(c) shows an example of a user interface of the schedule application. For descriptions of the user interface shown in FIG. 1B(c), refer to the foregoing descriptions of the user interface shown in FIG. 1A(d). Details are not described in this embodiment of this application again.

Optionally, the user is not limited to sliding rightward twice to find an icon of the schedule application. In another embodiment, the user may need to slide rightward a plurality of times to find the icon of the schedule application.

Because a display region of the display of the electronic device 100 is limited, only some schedule information can be displayed. If the user wants to view other undisplayed schedule information, as shown in FIG. 1B(d), the electronic device 100 may receive a slide up operation of the user for the display to display the other undisplayed schedule information.

A difference between schedule information shown in FIG. 1B(e) and the schedule information shown in FIG. 1B(c) lies in that FIG. 1B(e) further shows schedule information that is not shown in FIG. 1B(c), for example, "group meals, start at 6:30 p.m.".

A difference of Manner 2 from Manner 1 lies in that the user does not need to find the schedule application from a plurality of applications installed on the electronic device 100, and may directly view some schedule information in the schedule application in a manner of entering the shortcut application. However, it can be learned from the operations shown in FIG. 1B(a) to FIG. 1B(e) that, if the user adds a plurality of shortcut applications, the user further needs to find the schedule application from the plurality of shortcut applications. In addition, similar to that in Manner 1, the display region of the electronic device 100 is limited, so that the electronic device 100 cannot display all the schedule information. The user needs to slide up and down on the display of the electronic device 100 to view all the schedule information. Therefore, user operations are complex.

Based on the problems existing in Manner 1 and Manner 2 for viewing schedule information, embodiments of this application provide a display method. The method includes the following steps.

The electronic device 100 displays a watch face interface in full screen. The electronic device 100 receives and responds to an operation of a user, and the electronic device 100 zooms out the watch face interface for display. The electronic device 100 displays "dual rings" in a display region on the display other than a display region in which the zoomed-out watch face interface is located. Then, the electronic device 100 displays schedule information in one day on the "dual rings" in a form of a schedule tag based on time corresponding to each schedule.

The electronic device 100 may be a mobile phone, a wearable device, smart glasses, an augmented reality (augmented reality, AR) device, a virtual reality (virtual reality, VR) device, or the like. The wearable device may be a device supported by a wrist, for example, a smartwatch, a smart band, or a smart wristband. Alternatively, the wearable device may be a device supported by an ankle, for example, a smart foot ring, a smart shoe, a smart sock, or another device that can be worn on a leg. Alternatively, the wearable device may be a device supported by a head, for example, a smart helmet or a smart headband (which may also be referred to as a smart headband). An example in which the electronic device 100 is a smartwatch is used for description in embodiments of this application.

A shape of a watch face of the electronic device 100 may be any one of a circle, an ellipse, a square, a rectangle, a diamond, or a polygon like a trapezoid.

The "dual rings" may include a first ring and a second ring. A shape of the first ring and a shape of the second ring may be any one of a circle, an ellipse, a square, a rectangle, a diamond, or a polygon like a trapezoid. The shape of the watch face and the shape of the "dual rings" are not limited in this application, and the shape of the "dual rings" only needs to surround a circle of the watch face.

Optionally, in some embodiments, the electronic device 100 may not display the "dual rings", but directly display the schedule information in one day at a corresponding location in the form of the schedule tag based on the time corresponding to each schedule.

A display form of the schedule tag includes but is not limited to a graphic element, brightness, a color, a shape, a size, shadow, a transparency, and the like. The graphic element includes but is not limited to an arc line, a geometric pattern, a slash, and the like.

According to the display method provided in embodiments of this application, an interaction interface for viewing all-day schedule information more quickly, more conveniently, and more comprehensively may be provided for the user, so that the user can properly arrange time, and simultaneously, the user is provided with easier operations and more user-friendly interaction experience.

The schedule information may include a to-do list, travel information, meeting information, a weather condition, reminder information, group meals information, and the like. The electronic device 100 may obtain the schedule information from a system of the electronic device 100, or may obtain the schedule information from another device.

Optionally, display forms of schedule tags of different types of schedule information are different. In this way, the user may intuitively observe which types of schedule information exist.

Optionally, display forms of schedule information that is of a same type but different importance degrees may also be different. In this way, the user may intuitively observe relatively important schedule information.

Optionally, the schedule tag may further reflect duration occupied by corresponding schedule information, that is, start time and end time of the schedule information.

Optionally, the electronic device 100 may display a timescale on the display to help the user view time (start time or end time) of a schedule tag displayed on the "dual rings". In this way, the user may clearly view, through the timescale, duration occupied by the schedule tag.

Optionally, after the electronic device 100 displays a schedule tag corresponding to schedule information in a specific day, the electronic device 100 may further receive an operation of the user to view detailed content of a piece of specific schedule information in the specific day.

Optionally, after the electronic device 100 displays a schedule tag corresponding to schedule information in a specific day, the electronic device 100 may further receive an operation of the user to switch to display a schedule tag corresponding to schedule information in another day.

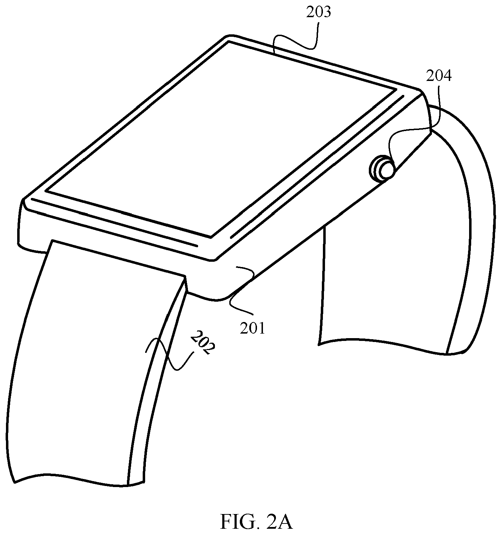

FIG. 2A is a diagram of a structure of the electronic device 100 (for example, a smartwatch).

As shown in FIG. 2A, the electronic device 100 may include a device body 201 and a wearable component 202.

The device body 201 includes a display 203 and a crown 204.

It should be noted that a shape of the device body 201 may be a circle, a square, or another shape. This is not limited in this application. In the following embodiments of this application, an example in which the shape of the device body 201 is a circle is used for description.

The display 203 may be disposed on a surface of the device body 201. The display 203 may display information, for example, display content such as time, a battery level of the device body 201, a Bluetooth identifier, a received message, and exercise data of a user. The display 203 may be a touchscreen. The display 203 may receive an operation (for example, sliding up with a single finger, sliding down with a single finger, pinching in with two fingers, or pinching out with two fingers) of the user, and display a page selected by the user.

The crown 204 is disposed on the device body 201. For example, the crown 204 may be disposed on a side of the device body 201, and the crown 204 may be pulled out from the device body 201 or inserted into the device body 201. The crown 204 may have two rotation directions, for example, a clockwise direction and a counter-clockwise direction. The crown 204 may alternatively be touch-type, for example, use a capacitive touch technology, where the capacitive touch technology may be used to detect whether the user is touching the crown. In addition, the crown 204 may further shake or pan along a track in one or more directions, where the track is along an edge of the device body 201 or at least partially around a periphery of the device body 201. In some embodiments, there may be one or more crowns 204, and a visual appearance of the crown 204 may be, but not necessarily, similar to a crown of a conventional watch.

In some embodiments, the crown 204 may include an elastic component. When the user presses the crown 204, the crown 204 may be partially trapped into the device body 201. After the user releases the crown 204, the crown 204 pops up, and is restored to a position before the user presses the crown 204.

In some other embodiments, when the user presses the crown 204, a position of the crown 204 does not change, that is, the position of the crown 204 is fixed, and the crown 204 is not trapped into the device body 201 with the operation of pressing the crown 204 by the user.

The device body 201 may further establish a wireless communication connection to an electronic device (for example, a mobile phone or a tablet computer).

In a possible implementation, the device body 201 may establish a wireless communication connection to the electronic device through Bluetooth. The device body 201 may send the exercise data of the user to the electronic device that establishes the communication connection to the device body. In addition, when the electronic device receives an incoming call or a message notification, the device body 201 may receive an instruction of the electronic device, to remind the user of the incoming call or the message notification.

The wearable component 202 is configured to install the device body 201. For example, the wearable component 202 may be an apparatus like a wristband or a watchband. The wearable component 202 is an apparatus that can help the device body 201 to be attached to the wrist of the user.

The foregoing embodiments merely describe examples of the structure of the electronic device 100, and this is not limited in this application.

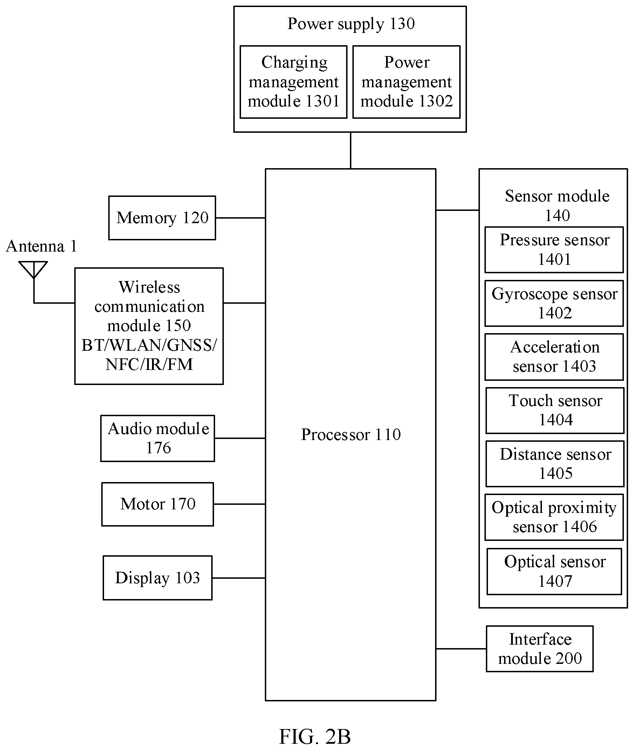

FIG. 2B is a diagram of an example of a hardware structure of the electronic device 100.

An example in which the electronic device 100 is a smartwatch is used for description in the following embodiments of this application. Alternatively, the electronic device 100 may be a wearable device like a smart band. This is not limited in this application.

It should be understood that the electronic device 100 shown in FIG. 2B is merely an example, and the electronic device 100 may have more or fewer components than those shown in FIG. 2B, or may have two or more components that are combined, or may have different component configurations. Components shown in FIG. 2B may be implemented by hardware, software, or a combination of hardware and software, including one or more signal processing and/or application-specific integrated circuits.

The electronic device 100 may include a processor 110, a memory 120, a power supply 130, a sensor module 140, a wireless communication module 150, an audio module 176, a motor 170, a display 103, and an interface module 200.

It may be understood that the structure shown in this embodiment of the present invention does not constitute a specific limitation on the electronic device 100. In some other embodiments of this application, the electronic device 100 may have more or fewer components than those shown in the figure, or have some components that are combined, or have some components that are split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), and a baseband processor. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, or the like.

The memory 120 may be configured to store computer-executable program code, and the executable program code includes instructions. The processor 110 implements various function applications and data processing of the electronic device 100 by running instructions stored in the memory 120.

The power supply 130 may include a charging management module 1301 and a power management module 1302.

The charging management module 1301 is configured to receive a charging input from a charger. The charger may be a wireless charger or a wired charger. In some embodiments of wired charging, the charging management module 1301 may receive a charging input of a wired charger through the USB interface. In some embodiments of wireless charging, the charging management module 1301 may receive a wireless charging input through a wireless charging coil of the electronic device 100. The charging management module 1301 may further supply power to the wearable device through the charging management module 1301 while charging a battery.

The power management module 1302 is configured to connect to the battery. The power management module 1302 receives an input of the battery and/or the charging management module 1301, and supplies power to the processor 110, the memory 120, the wireless communication module 150, the display 103, and the like. The power management module 1302 may further be configured to monitor parameters such as a battery capacity, a battery cycle count, and a battery health status (electric leakage or impedance). In some other embodiments, the power management module 1302 may be further disposed in the processor 110. In some other embodiments, the power management module 1302 and the charging management module 1301 may be alternatively disposed in a same component.

The sensor module 140 may include a pressure sensor 1401, a gyroscope sensor 1402, an acceleration sensor 1403, a touch sensor 1404, a distance sensor 1405, an optical proximity sensor 1406, an optical sensor 1407, and the like.

The pressure sensor 1401 is configured to sense a pressure signal, and can convert the pressure signal into an electrical signal. In some embodiments, the pressure sensor 1401 may be disposed on the display 103. There are a plurality of types of pressure sensors 1401, such as a resistive pressure sensor, an inductive pressure sensor, and a capacitive pressure sensor. The capacitive pressure sensor may include at least two parallel plates made of conductive materials. When a force is applied to the pressure sensor 1401, capacitance between electrodes changes. The electronic device 100 determines pressure intensity based on a capacitance change. When a touch operation is performed on the display 103, the electronic device 100 detects intensity of the touch operation through the pressure sensor 1401. The electronic device 100 may calculate a touch location based on a detection signal of the pressure sensor 1401. In some embodiments, touch operations that are performed at a same touch location but have different touch operation intensity may correspond to different operation instructions.

The gyroscope sensor 1402 may be configured to determine a motion posture of the electronic device 100. In some embodiments, an angular velocity of the electronic device 100 around three axes (namely, axes x, y, and z) may be determined by using the gyroscope sensor 1402.

The acceleration sensor 1403 may detect accelerations in various directions (usually on three axes) of the electronic device 100. When the electronic device 100 is still, magnitude and a direction of gravity may be detected. The acceleration sensor may be further configured to recognize a posture of the wearable device.

The touch sensor 1404 may also be referred to as a touch panel or a touch-sensitive surface. The touch sensor 1404 may be disposed on the display 103, and the touch sensor 1404 and the display 103 constitute a touchscreen, which is also referred to as a "touch screen". The touch sensor 1404 is configured to detect a touch operation performed on or near the touch sensor 1404. The touch sensor may transfer the detected touch operation to the processor 110, to determine a type of a touch event. A visual output related to the touch operation may be provided through the display 103.

The distance sensor 1405 is configured to measure a distance. The electronic device 100 may measure a distance through infrared or laser.

The optical proximity sensor 1406 may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. When the electronic device 100 may detect, through the optical proximity sensor 1406, that the wearable device worn by the user on the wrist is far away from the face of the user (in other words, the user does not view the electronic device 100 and does not perform an operation), the electronic device 100 may automatically perform screen-off for power saving.

The optical sensor 1407 may be configured to monitor a rotation angle and a rotation direction (a counter-clockwise direction or a clockwise direction) of a crown.

The wireless communication module 150 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processor module. The wireless communication module 150 receives an electromagnetic wave through an antenna 1, performs frequency modulation and filtering processing on the electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 1.

The motor 170 may generate a vibration prompt. The motor 170 may be configured to provide an incoming call vibration prompt and a touch vibration feedback. For example, touch operations performed on different applications (for example, photographing and audio playback) may correspond to different vibration feedback effects. The motor 170 may also correspond to different vibration feedback effects for touch operations performed on different regions of the display 103. Different application scenarios (for example, a time reminder, information reception, an alarm clock, and page switching) may also correspond to different vibration feedback effects. A touch vibration feedback effect may further be customized.

The display 103 is configured to display an image, a video, and the like. The display 103 includes a display panel.

The interface module 200 may serve as an interface for each external apparatus connected to the electronic device 100. For example, the interface module 200 may receive data sent from the external apparatus, receive power to transmit the power to each element in the electronic device 100, or send internal data of the electronic device 100 to the external apparatus. For example, the interface module 200 may include a port of a wired or wireless head-mounted apparatus, an external power supply port, a wired or wireless data port, a port configured to connect to an apparatus having an identification module, an audio input/output (I/O) port, a video I/O port, and the like.

There may be a plurality of manners of collecting schedule information. This is not specifically limited herein.

The manners of collecting the schedule information may include but are not limited to the following manners.

### (1) Various devices collect the schedule information

User data can be collected through various devices. These devices can interconnect with each other and form an ecological chain, or can be independent of each other and are not connected.

For example, after another device obtains the schedule information, the another device synchronizes the schedule information to the electronic device 100.

### (2) An application (application, APP) collects the schedule information

Various apps may be installed in an electronic device, and may include a system app or a third-party app. The system app is an app provided or developed by a manufacturer of the electronic device, and the third-party app is an app provided or developed by a manufacturer of a non-electronic device. The manufacturer of the electronic device may include a maker, a supplier, a provider, an operator, or the like of the electronic device.

When the electronic device runs an app to provide a service for a user, the app may collect related schedule information. For example, travel information in the schedule information may be collected from a ticket booking app, meeting information or reminder information in the schedule information may be collected from a notepad app, and a weather condition in the schedule information may be collected from a weather app.

### (3) An information input component of an electronic device collects the schedule information

The information input component may include but is not limited to a display, a camera, a microphone, a mouse, a keyboard, a headset, and the like.

For example, a user may input information in a form of a text, a voice, or the like, the electronic device 100 receives, through the information input component, the information input by the user, and then the electronic device 100 obtains the schedule information from the information input by the user.

It should be noted that the electronic device 100 may further obtain the schedule information in another manner. This is not limited in embodiments of this application.

The following describes in detail the technical solutions in embodiments of this application with reference to the accompanying drawings.

An example in which the electronic device 100 is a smartwatch is used for description in embodiments of this application. It may be understood that, in this application, the smartwatch constitutes no limitation on another embodiment. A device type of the electronic device 100 may alternatively be another device, and all solutions that can implement the inventive concept of this application fall within the protection scope of this application.

In embodiments of this application, the electronic device 100 may be provided with a display that supports touch.

In embodiments of this application, the display of the smartwatch may also be referred to as a "watch face".

It may be understood that user interfaces described in the following embodiments of this application are merely example interfaces, and do not constitute a limitation on other embodiments of this application. In another embodiment, the user interface may use different interface layouts, may include more or fewer controls, and may add or reduce other function options. The following example interfaces may also be migrated to another type of device. All technical solutions based on a same inventive idea provided in this application fall within the protection scope of this application.

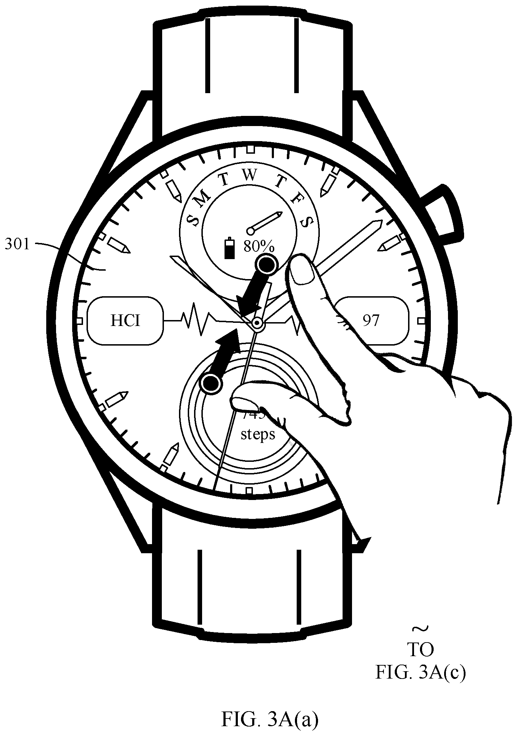

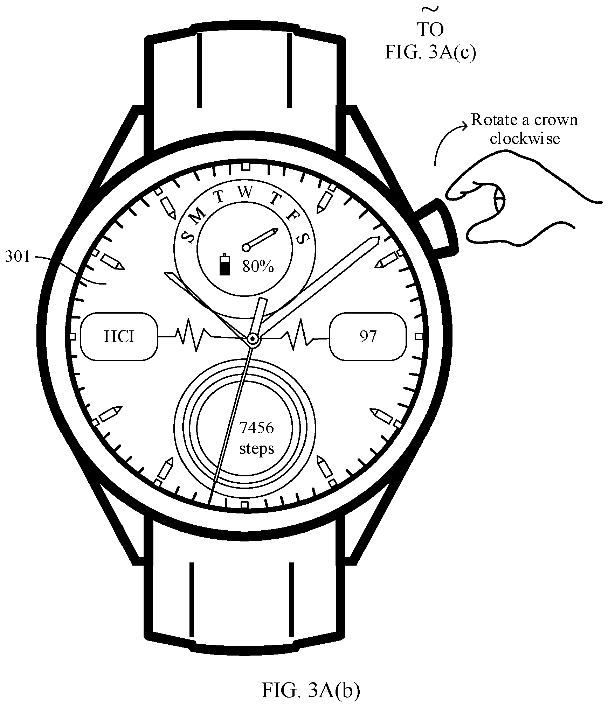

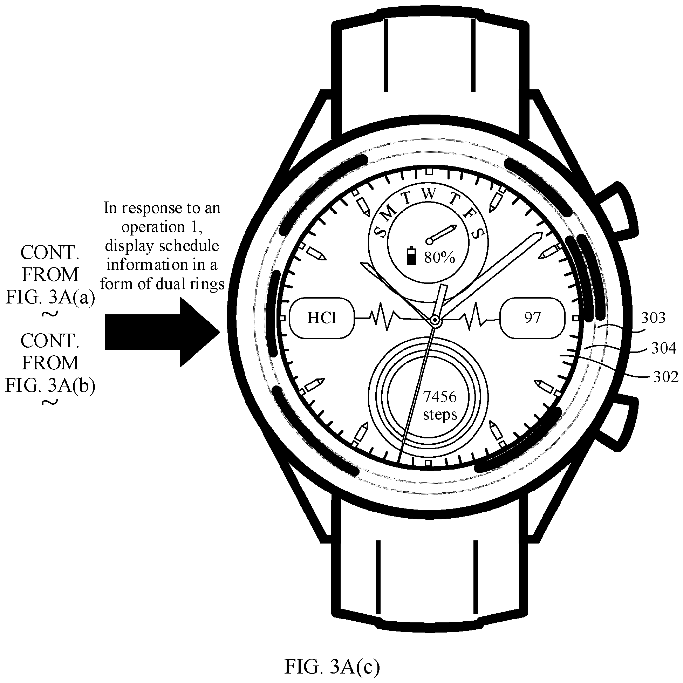

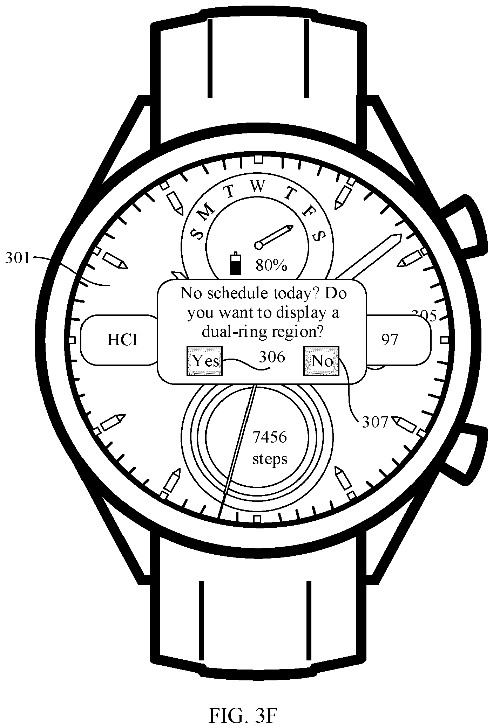

FIG. 3A(a) to FIG. 3F are a group of diagrams of examples how the electronic device 100 displays a schedule tag corresponding to schedule information.

FIG. 3A(a) shows an example of a home screen 301 of the electronic device 100. A display region in which the home screen 301 is located is a complete display region of a display of the electronic device 100. In some embodiments, the display region in which the home screen 301 is located may also be referred to as a first region. In some embodiments, the home screen 301 may also be referred to as a first interface.

The home screen 301 displays a moment (for example, 10:08:32 a.m.), a heart rate (for example, 97 beats per minute), and a battery level (for example, 80%). Optionally, the home screen 301 may further display a current date (for example, December 25), and the home screen 301 may alternatively be displayed in another form. This is not limited in embodiments of this application.

Optionally, in another embodiment, in addition to the display region in which the home screen 301 is located, a blank region other than the home screen 301 of the electronic device 100 may also be a display region. In this case, the electronic device 100 expands the display region occupied by the home screen 301, and the electronic device 100 uses the complete display region of the electronic device 100 as the display region occupied by the home screen 301.

As shown in FIG. 3A(a) or FIG. 3A(b), the electronic device 100 receives an operation 1 of a user, and in response to the operation 1 of the user, the electronic device 100 displays a user interface shown in FIG. 3A(c). In some embodiments, the operation 1 may also be referred to as a first operation.

The operation 1 may be a pinch-in operation (for example, a pinch-in operation with two fingers or a plurality of fingers) that is performed on the home screen 301, or the operation 1 may be an operation (for example, a rotation operation or a press operation) performed on a crown of the electronic device. In another embodiment, the operation 1 may alternatively be a multi-finger slide operation, a multi-finger touch operation, a watch face touch and hold operation, a triggering gesture, a wrist raising operation, or the like. A specific implementation of the operation 1 is not limited in embodiments of this application.

For example, the operation 1 may be a pinch-in operation with two fingers on the display, shown in FIG. 3A(a). Alternatively, the operation 1 may be a rotation operation (for example, a clockwise rotation operation) for the crown shown in FIG. 3A(b).

In addition to a display region in which a home screen 302 is located, a display region shown in FIG. 3A(c) further includes a display region in which a schedule tag on a periphery of the home screen 302 is located. In some embodiments, the display region in which the home screen 302 is located may also be referred to as a second region. In some embodiments, the home screen 302 may also be referred to as a second interface.

An area of the display region in which the home screen 302 is located is less than an area of the display region in which the home screen 301 is located, and a circle center of the home screen 302 and a circle center of the home screen 301 are a same circle center. In this way, the electronic device 100 may display the schedule tag in a display region of the display other than the display region in which the home screen 302 is located.

Optionally, displayed content on the home screen 302 is the same as that on the home screen 301. Because the area of the display region in which the home screen 302 is located is less than the area of the display region in which the home screen 301 is located, a text size and/or an image displayed on the home screen 302 are also accordingly zoomed out. The electronic device 100 displays the schedule tag in a display region outside the home screen 302. In this way, after the electronic device 100 displays the schedule tag in the display region outside the home screen 302, the electronic device 100 may further receive an operation performed by the user on the home screen 302, so that the electronic device 100 performs another function without affecting another function operation.

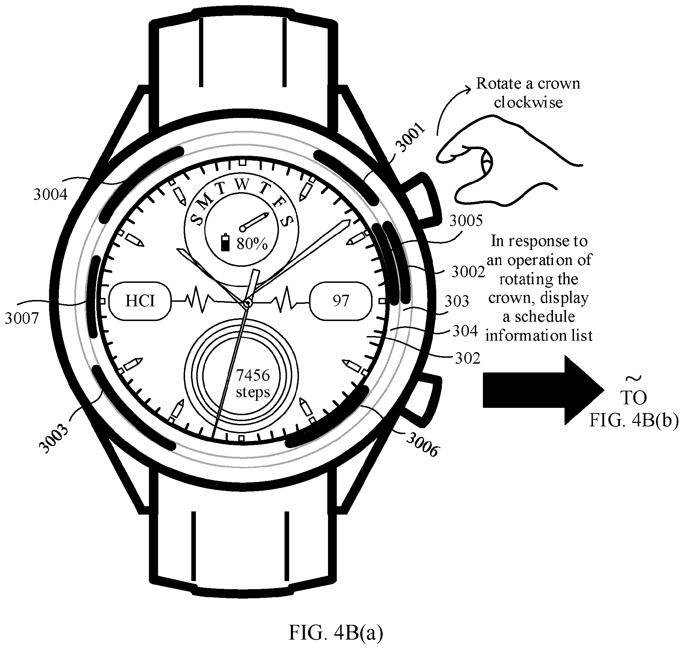

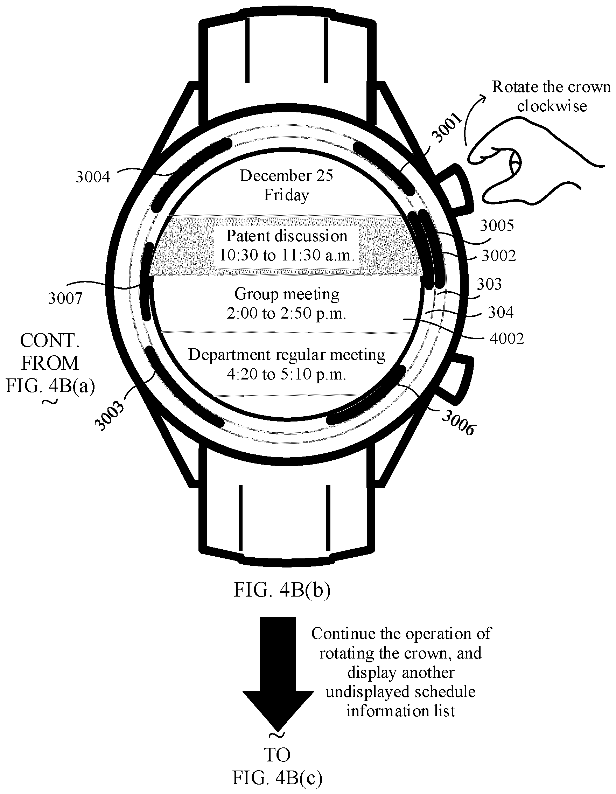

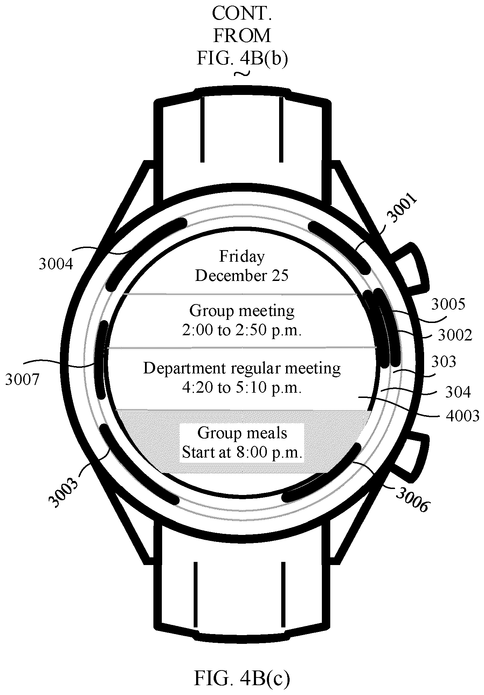

Optionally, displayed content on the home screen 302 may be different from that on the home screen 301. The home screen 302 may display a schedule information list in a current day, for example, a schedule information list displayed on a subsequent user interface 4002 shown in FIG. 4B(b), or a schedule information list displayed on a subsequent user interface 4003 shown in FIG. 4B(c). In this way, the electronic device 100 displays the schedule tag in the display region outside the home screen 302, and the user may further view the schedule information list in one day on the home screen 302.

The electronic device 100 may display "dual rings" in a schedule tag display region. The "dual rings" may be a ring 303 and a ring 304 that are on the periphery of the home screen 302 shown in FIG. 3A(c). The ring 303 and the ring 304 may be referred to as "dual rings". A circle center of the ring 303 and a circle center of the ring 304 are a same circle center as a circle center of the home screen 302, the display region in which the home screen 302 is located is adjacent to a display region in which the ring 304 is located, and the display region in which the home screen 302 is located does not overlap the display region in which the ring 304 is located. A display region in which the ring 303 is located is adjacent to the display region in which the ring 304 is located, and the display region in which the ring 303 is located does not overlap the display region in which the ring 304 is located. Both the ring 303 and the ring 304 shown in FIG. 3A(c) are hollow circles. In another embodiment, the ring 303 and/or the ring 304 may alternatively be solid circles (for example, filled with a color). This is not limited in embodiments of this application. The electronic device 100 may display, on the ring 303, a schedule tag corresponding to schedule information from 00:00 to 12:00 in one day, and display, on the ring 304, a schedule tag corresponding to schedule information from 12:00 to 24:00 in one day.

In some embodiments, the display region of the display other than the display region in which the home screen 302 is located may also be referred to as a third region. That is, the display region in which the ring 303 is located and the display region in which the ring 304 is located may also be referred to as third regions. The user interface on which the ring 303 and the ring 304 are located may also be referred to as a third interface. The ring 303 may also be referred to as a first ring, and the ring 304 may also be referred to as a second ring.

Optionally, the electronic device 100 may alternatively display, on the ring 304, a schedule tag corresponding to schedule information from 00:00 to 12:00 in one day, and display, on the ring 303, a schedule tag corresponding to schedule information from 12:00 to 24:00 in one day. This is not limited in embodiments of this application. The following embodiments of this application provide descriptions by using an example in which the electronic device 100 may display, on the ring 303, the schedule tag corresponding to the schedule information from 00:00 to 12:00 in one day, and display, on the ring 304, the schedule tag corresponding to the schedule information from 12:00 to 24:00 in one day. However, this should not constitute a limitation.

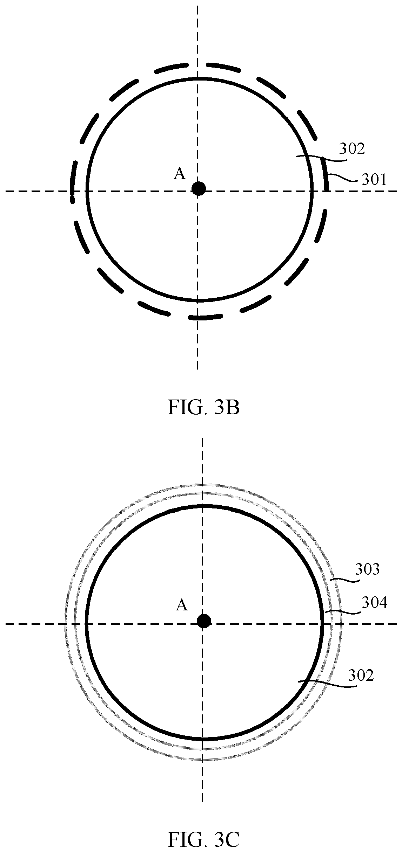

FIG. 3B and FIG. 3C are diagrams of examples in which the electronic device 100 displays "dual rings".

It can be learned from FIG. 3B that before the electronic device 100 displays the "dual rings", the electronic device 100 displays the home screen 301. The home screen 301 may be a watch face interface, or the home screen 301 may be another interface. This is not limited in embodiments of this application. The following embodiments of this application provide descriptions by using an example in which the home screen 301 is the watch face interface. A circle center of the home screen 301 is a circle center A, and the display region in which the home screen 301 is located is the complete display region of the display of the electronic device 100.

After the electronic device 100 receives the operation 1 of the user, the electronic device 100 zooms out the display region of the home screen 301, and the electronic device 100 displays the home screen 302. The area of the display region in which the home screen 302 is located is less than the area of the display region in which the home screen 301 is located, and a circle center of the home screen 302 is also the circle center A. That is, the home screen 302 and the home screen 301 share one circle center, but a diameter of the home screen 302 is less than a diameter of the home screen 301.

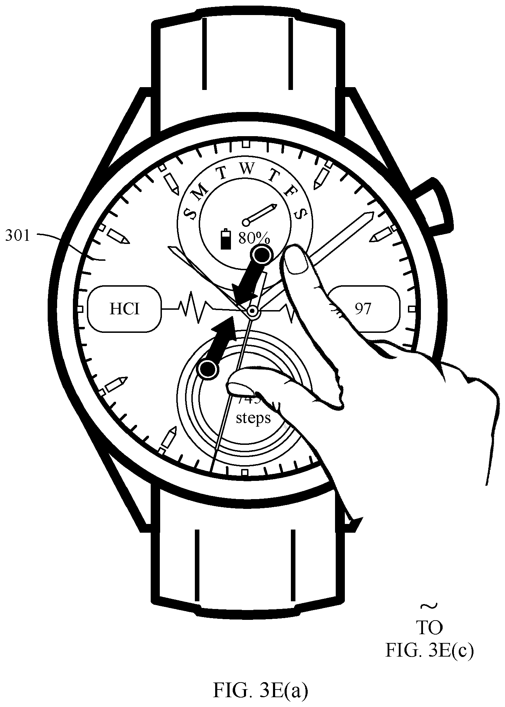

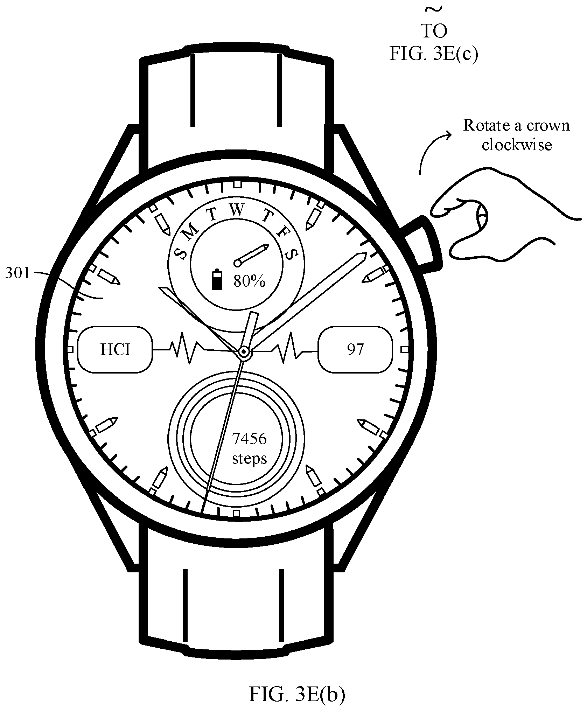

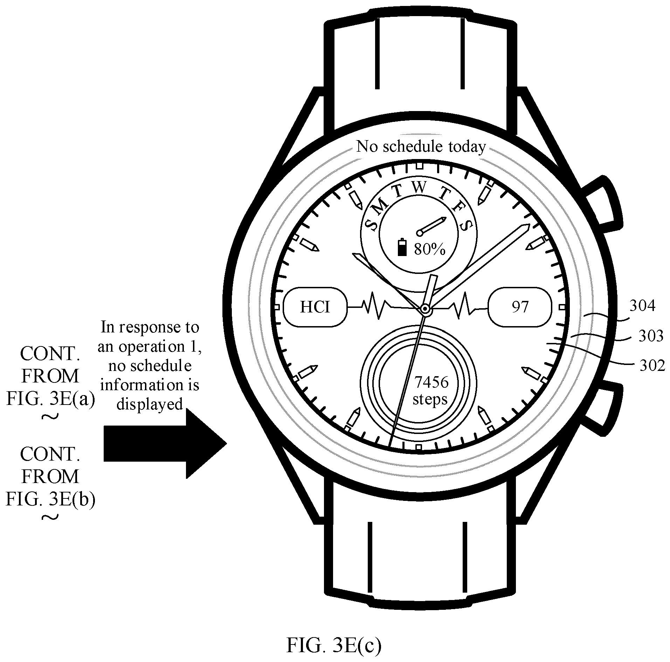

As shown in FIG. 3C, after the electronic device 100 displays the home screen 302, the electronic device 100 displays the "dual rings" in the display region other than the display region in which the home screen 302 is located. To be specific, as shown in FIG. 3E(a) to FIG. 3E(c), the ring 303 and the ring 304 are displayed in the display region outside the home screen 302. The display region in which the home screen 302 is located, the display region in which the ring 303 is located, and the display region in which the ring 303 is located are the complete display region of the display of the electronic device 100.

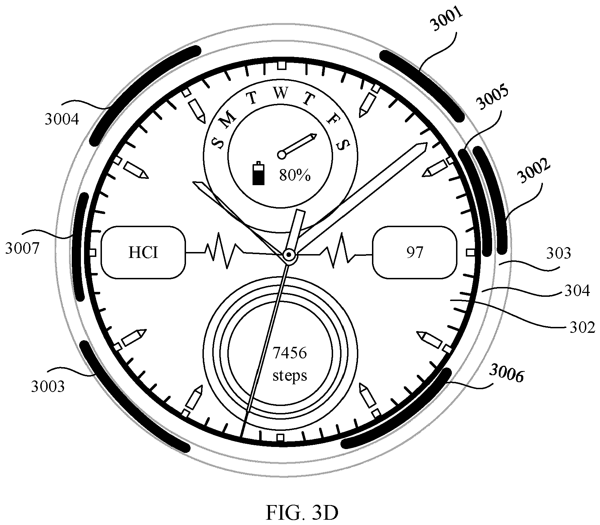

FIG. 3D is a diagram of an example how the electronic device 100 displays schedule tags on the "dual rings".

As shown in FIG. 3D, the schedule information from 00:00 to 12:00 in one day includes schedule information corresponding to a schedule tag 3001, schedule information corresponding to a schedule tag 3002, schedule information corresponding to a schedule tag 3003, and schedule information corresponding to a schedule tag 3004. Time of the schedule information corresponding to the schedule tag 3001 is 00:48 to 1:30, time of the schedule information corresponding to the schedule tag 3002 is 2:00 to 3:00, time of the schedule information corresponding to the schedule tag 3003 is 6:48 to 7:15, and time of the schedule information corresponding to the schedule tag 3004 is 10:00 to 11:20. The schedule tag 3001, the schedule tag 3002, the schedule tag 3003, and the schedule tag 3004 are displayed on the ring 303.

The schedule information from 12:00 to 24:00 in one day correspondingly includes schedule information corresponding to the schedule tag 3005, schedule information corresponding to the schedule tag 3006, and schedule information corresponding to the schedule tag 3007. Time of the schedule information corresponding to the schedule tag 3005 is 14:00 to 15:00, time of the schedule information corresponding to the schedule tag 3006 is 16:12 to 17:24, and time of the schedule information corresponding to the schedule tag 3007 is 20:34 to 21:32. The schedule tag 3005, the schedule tag 3006, and the schedule tag 3007 are displayed on the ring 304.

In some embodiments, the schedule tag 3001, the schedule tag 3002, the schedule tag 3003, the schedule tag 3004, the schedule tag 3005, the schedule tag 3006, and the schedule tag 3007 may also be referred to as reminder tags corresponding to one or more schedule items on a first date. A schedule tag may also be referred to as a reminder tag.

The schedule tag 3001, the schedule tag 3002, the schedule tag 3003, and the schedule tag 3004 may also be referred to as reminder tags corresponding to one or more schedule items from 00:00 to 12:00 on the first date.

The schedule tag 3005, the schedule tag 3006, and the schedule tag 3007 may also be referred to as reminder tags corresponding to one or more schedule items from 12:00 to 24:00 on the first date.

It should be noted that FIG. 3D is merely a diagram of an example of displaying a schedule tag by the electronic device 100, and should not constitute a limitation.

Optionally, if there is no schedule information in one day, as shown in FIG. 3E(a) or FIG. 3E(b), after the electronic device 100 receives the operation 1 of the user, the electronic device 100 may display a user interface shown in FIG. 3E(c).

FIG. 3E(c) is similar to FIG. 3A(c), and a difference lies in that in FIG. 3E(c), no schedule tag corresponding to schedule information is displayed on the dual rings. Because there is no schedule today, the electronic device 100 may display, in the display region outside the home screen 302, prompt information shown in FIG. 3E(c). The prompt information may be "no schedule today". The prompt information is used to prompt the user that there is no schedule information today. The prompt information may alternatively be other content. This is not limited in embodiments of this application. Optionally, after the prompt information shown in FIG. 3E(c) is displayed in the display region outside the home screen 302, the home screen 302 may be automatically restored to the home screen 301 after a preset time period.

Optionally, the electronic device 100 may not display the prompt information shown in FIG. 3E(c).

Optionally, when there is no schedule today, the electronic device 100 may not display the dual rings (for example, the ring 303 and the ring 304) shown in FIG. 3E(c).

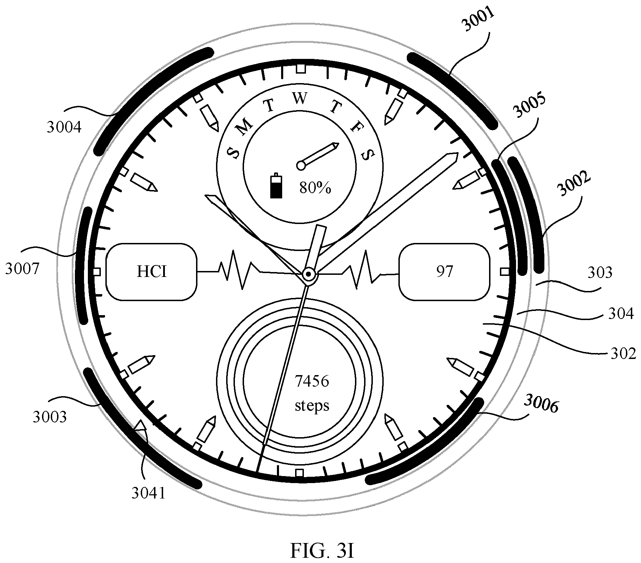

Optionally, when there is no schedule today, before the electronic device 100 displays the user interface shown in FIG. 3E(c), the electronic device 100 may display prompt information, a control 306, and a control 307 that are shown in FIG. 3F, where the prompt information includes "No schedule today? Do you want to display a dual-ring region?". The prompt information is used to prompt the user whether to display a user interface shown in FIG. 3I. The electronic device 100 may receive an input operation of the user for the control 306, and in response to the input operation of the user, the electronic device 100 may display the user interface shown in FIG. 3E(c). The electronic device 100 may also receive an input operation of the user for the control 307, and in response to the input operation of the user, the electronic device 100 does not display the user interface shown in FIG. 3E(c), but displays the user interface shown in FIG. 3A(a).

In addition to the input operations of the user for the control 306 and the control 307, the user may also perform an operation of rotating or pressing the crown to determine whether to display the user interface shown in FIG. 3E(c).

### The following describes a display form of a schedule tag.

1. After the electronic device 100 receives the operation 1 of the user, the electronic device 100 determines schedule tags corresponding to schedule information in one day, and the electronic device 100 sequentially displays, based on time of different schedule information and in a time sequence, the schedule tags corresponding to all the schedule information. In this way, the electronic device 100 may dynamically display the schedule tags.

Optionally, the electronic device 100 may display a next schedule tag or a plurality of consecutive schedule tags at intervals of preset time (for example, 300 ms) until the electronic device 100 completely displays the last schedule tag by analogy. For example, at 300 ms after the electronic device 100 displays the schedule tag 3001, the electronic device 100 displays the schedule tag 3002 until the electronic device 100 completely displays the schedule tag 3007 by analogy.

Optionally, the electronic device 100 may first simultaneously display schedule tags corresponding to schedule information from 00:00 to 12:00, and then simultaneously display schedule tags corresponding to schedule information from 12:00 to 24:00. For example, the electronic device 100 first simultaneously displays the schedule tag 3001, the schedule tag 3002, the schedule tag 3003, and the schedule tag 3004, and after specific time (for example, 300 ms) after the electronic device 100 displays the schedule tag 3001, the schedule tag 3002, the schedule tag 3003, and the schedule tag 3004, the electronic device 100 simultaneously displays the schedule tag 3005, the schedule tag 3006, and the schedule tag 3007.

Optionally, the electronic device 100 may display all schedule tags corresponding to schedule information from 00:00 to 12:00 and all schedule tags corresponding to schedule information from 12:00 to 24:00. For example, the electronic device 100 simultaneously displays all the schedule tag 3001, the schedule tag 3002, the schedule tag 3003, the schedule tag 3004, the schedule tag 3005, the schedule tag 3006, and the schedule tag 3007.

2. Display shapes of schedule tags at different display locations are different.

Display shapes of schedule tags at different locations on the "dual rings" are different. A shape of a schedule tag from 00:48 to 1:30 may be different from a shape of a schedule tag displayed from 2:00 to 3:00. For example, the schedule tag displayed from 00:48 to 1:30 may have a trapezoid shape, and the schedule tag displayed from 2:00 to 3:00 may have a curved shape.

3. Display forms of schedule tags corresponding to different types of schedule information are different.

The display forms of the schedule tags corresponding to the different types of schedule information are different. The types of schedule information include but are not limited to: a to-do list, travel information, meeting information, a weather condition, reminder information, group meals information, and the like.

For example, the display form of the schedule tag includes but is not limited to a shape, a size, a color, brightness, a state, and the like of the schedule tag.

After the electronic device 100 obtains schedule information, the electronic device 100 may display the schedule information on the display of the electronic device 100 based on a type of the schedule information by using a schedule tag of a corresponding type.

For example, a display form of a schedule tag corresponding to the meeting information may be a solid line arc. A display form of a schedule tag corresponding to the travel information may be an arc formed by triangle elements. A display form of a schedule tag corresponding to the weather condition may be an arc formed by slash elements. A display form of a schedule tag corresponding to the group meals information may be an arc formed by circular elements. In this way, the user may intuitively view schedule information in one day by using schedule tags of different representation forms.

Optionally, display forms of schedule tags corresponding to schedule information of a same type but different events may also be different. The schedule information of a same type but different events may be classified based on content of the schedule information.

For example, for schedule information of a meeting information type, the schedule information of the meeting information type may be classified into an important meeting and an unimportant meeting according to a priority of a meeting. For example, a display form of a schedule tag corresponding to the important meeting may be a red arc, and a display form of a schedule tag corresponding to the unimportant meeting may be a white arc.

Optionally, the important meeting and the unimportant meeting may be determined based on content of the schedule information, for example, a keyword of the schedule information, for example, "department meeting" or "group meeting". The electronic device 100 determines, based on the keyword "department meeting", that the meeting is the important meeting, and the electronic device 100 determines, based on the keyword "group meeting", that the meeting is the unimportant meeting.

Alternatively, the user may make a tag for schedule information of a meeting based on an importance degree of the meeting. The electronic device 100 determines the importance degree of the meeting based on the tag of the schedule information. The electronic device 100 may alternatively determine the importance degree of the meeting in another manner. This is not limited in embodiments of this application.

For schedule information of a weather condition type, the schedule information of the weather condition type may be classified into rainstorm weather, light rain weather, heavy snow weather, light snow weather, and the like based on different weather conditions. For example, a display form of a schedule tag corresponding to the rainstorm weather may be an arc formed by red slashes. A display form of a schedule tag corresponding to the light rain weather may be an arc formed by yellow slashes. A display form of a schedule tag corresponding to the heavy snow weather may be an arc formed by red slashes, and the arc dynamically blinks. A display form of a schedule tag corresponding to the light snow weather may be an arc formed by yellow slashes, and the arc dynamically blinks.

For schedule information of a travel information type, the schedule information of the travel information type may be classified into a flight, a train, a car, a high-speed railway, and the like based on different travel manners. For example, a display form of a schedule tag corresponding to the flight may be an arc formed by red triangles, a display form of a schedule tag corresponding to the train may be an arc formed by black triangles, a display form of a schedule tag corresponding to the car may be an arc formed by yellow triangles, and a display form of a schedule tag corresponding to the high-speed railway may be an arc formed by green triangles.

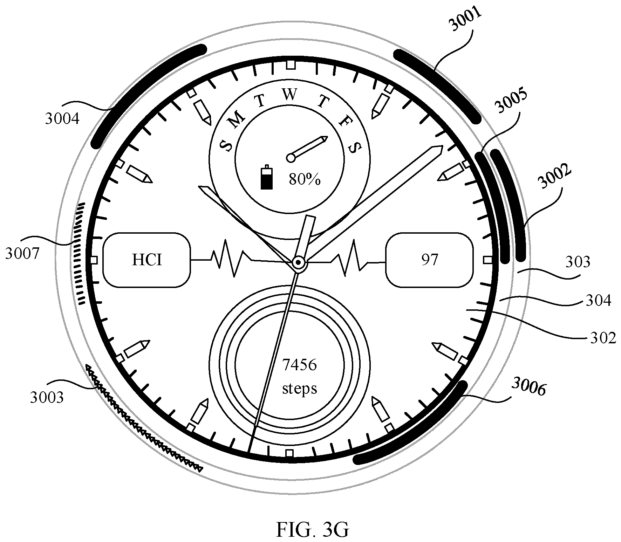

For example, FIG. 3G is a diagram of an example in which display forms of schedule tags corresponding to different types of schedule information are different.

A difference between FIG. 3G and FIG. 3D lies in that a type of schedule information corresponding to the schedule tag 3003 and a type of schedule information corresponding to the schedule tag 3007 are different from a type of other schedule information.

For example, the type of the schedule information corresponding to the schedule tag 3003 may be travel information, and a travel manner is a train. In this case, a display form of the schedule tag 3003 may be the arc formed by black triangles.

The type of the schedule information corresponding to the schedule tag 3007 may be a weather condition, and the weather condition is a rainstorm. In this case, a display form of the schedule tag 3007 may be the arc formed by red slashes (FIG. 3G does not show that a color of the schedule tag 3007 is red).

Types of schedule information corresponding to other schedule tags in FIG. 3G, for example, the schedule tag 3001, the schedule tag 3002, the schedule tag 3004, the schedule tag 3005, and the schedule tag 3006, are all meeting information, and are unimportant meetings. In this case, display forms of the schedule tag 3001, the schedule tag 3002, the schedule tag 3004, the schedule tag 3005, and the schedule tag 3006 may all be an arc formed by a white (or another color) solid line (FIG. 3G does not show that colors of the schedule tag 3001, the schedule tag 3002, the schedule tag 3004, the schedule tag 3005, and the schedule tag 3006 are white).

4. As time changes, a display form of a schedule tag displayed by the electronic device 100 on the "dual ring" also changes.

A display form of a schedule tag includes but is not limited to a shape, a size, a color, brightness, a state, and the like of the schedule tag.

Optionally, when time is about to arrive at start time of a piece of specific schedule information, a schedule tag corresponding to the schedule information may dynamically blink or a color is deepened, to prompt the user that execution time of the schedule information is about to arrive. For example, if the current time is 6:00, and start time of the schedule information corresponding to the schedule tag 3003 is 6:15, the time is about to arrive at the start time of the schedule information corresponding to the schedule tag 3003. In this case, the schedule tag 3003 may dynamically blink or a color displayed by the schedule tag 3003 is deepened, to prompt the user that the schedule information corresponding to the schedule tag 3003 is to be executed.

5. To reduce excessive content displayed on the "dual rings", for a schedule that has occurred (time of schedule information that has occurred is earlier than the current time) or a schedule on which a corresponding operation has been performed by the user, the electronic device 100 may not display a schedule tag of schedule information corresponding to the foregoing types of schedules.

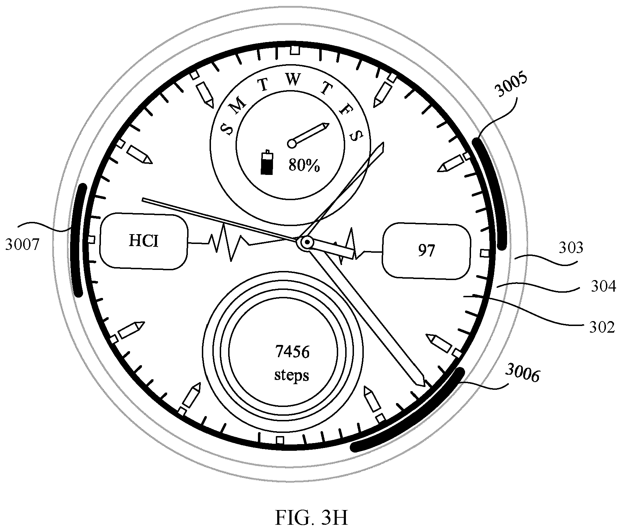

FIG. 3H is a diagram of an example of displaying only some schedule tags by the electronic device 100.

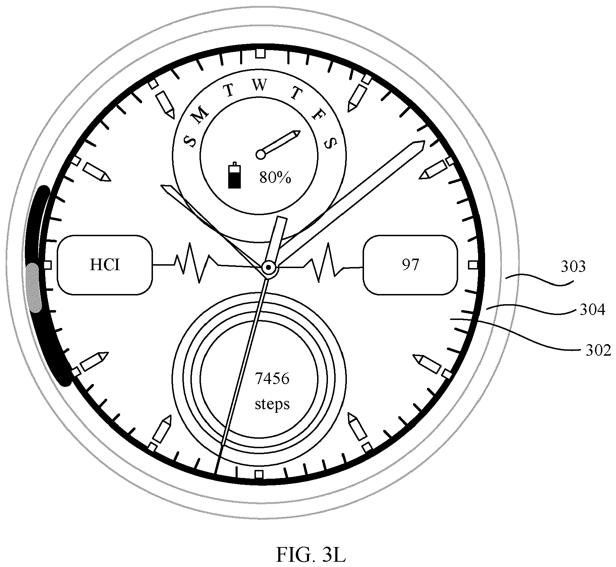

A difference between FIG. 3H and FIG. 3D lies in that the current time shown in FIG. 3L is 1:28 p.m. In this case, for a schedule whose end time has passed 1: 28 p.m., or a schedule on which the user has performed a corresponding operation before 1:28 p.m., the electronic device 100 no longer displays a schedule tag of such type of schedule information.

For example, in FIG. 3H, end time of the schedule information corresponding to the schedule tag 3001, the schedule tag 3002, the schedule tag 3003, and the schedule tag 3004 are all before 1:34 p.m. on December 25. In this case, the electronic device 100 may not display the schedule tag 3001, the schedule tag 3002, the schedule tag 3003, and the schedule tag 3004 in FIG. 3H. However, execution time of the schedule information corresponding to the schedule tag 3005, the schedule tag 3006, and the schedule tag 3007 are all after 1:34 p.m. on December 25. In this case, the electronic device 100 may display the schedule tag 3005, the schedule tag 3006, and the schedule tag 3007 in FIG. 3H.

6. When there are a plurality of pieces of schedule information in a same time period, the electronic device 100 displays, in a specific manner, schedule tags corresponding to the plurality of pieces of schedule information.

There are a plurality of pieces of schedule information in a same time period, that is, execution time and end time of the plurality of pieces of schedule information are the same. In this case, when the electronic device 100 simultaneously displays, on the "dual rings", the schedule tags corresponding to the plurality of pieces of schedule information, the schedule tags corresponding to the plurality of pieces of schedule information are displayed in an overlapping manner.

To highlight the plurality of schedule tags that are displayed in the overlapping manner, the electronic device 100 may display, in a specific manner, the plurality of schedule tags that are displayed in the overlapping manner, to prompt the user that the plurality of pieces of schedule information exist in the same time period and prompt the user to properly arrange time.

The specific manner may be alternately displaying the plurality of schedule tags that are displayed in the overlapping manner. If two schedule tags are displayed in the overlapping manner, the two schedule tags may be alternately displayed. For example, a first schedule tag in the plurality of schedule tags that are displayed in the overlapping manner is first displayed. After specific time (for example, 1s), the electronic device 100 displays a second schedule tag in the plurality of schedule tags that are displayed in the overlapping manner, and the first schedule tag is hidden and not displayed. After the specific time (for example, 1s), the electronic device 100 performs the first schedule tag again, and the second schedule tag is hidden and not displayed, and so on, so that the plurality of schedule tags that are displayed in the overlapping manner may be alternately displayed.

Alternatively, the specific manner may be displaying a tag on or beside the plurality of schedule tags that are displayed in the overlapping manner, and the tag is used to prompt the user that there is a plurality of pieces of schedule information in the time period.

Alternatively, the specific manner may be displaying the plurality of schedule tags that are displayed in the overlapping manner by using a schedule tag of a specific shape and/or a specific color.

FIG. 3I is a diagram of an example in which the electronic device 100 displays a plurality of schedule tags in an overlapping manner in a same time period.

A difference between FIG. 3I and FIG. 3D lies in that in FIG. 3I, a plurality of schedule tags are displayed in the overlapping manner in a time period from 6:48 to 8:12. A tag 3041 is displayed in FIG. 3I, and the tag 3041 indicates that a plurality of schedule tags are displayed in the overlapping manner in a time period from 6:15 to 7:20.

FIG. 3I shows only an example of a representation form of the tag. The electronic device 100 may further display another type of tag. This is not limited in embodiments of this application.

The foregoing embodiments merely show examples of several display forms of a schedule tag. In another embodiment, more other display forms may be included. This is not limited in embodiments of this application.

7. If schedule tags corresponding to two schedules partially overlap, the electronic device 100 may display a schedule tag of an overlapping part in a specific manner.

If the two schedule tags that are displayed in a partially overlapping manner belong to schedule information of different types, and display forms of the two schedule tags are also different, the electronic device 100 displays the two schedule tags of different display forms directly in an overlapping manner. In this way, the user may intuitively observe that two different schedule tags are displayed in the overlapping manner in a specific time period.

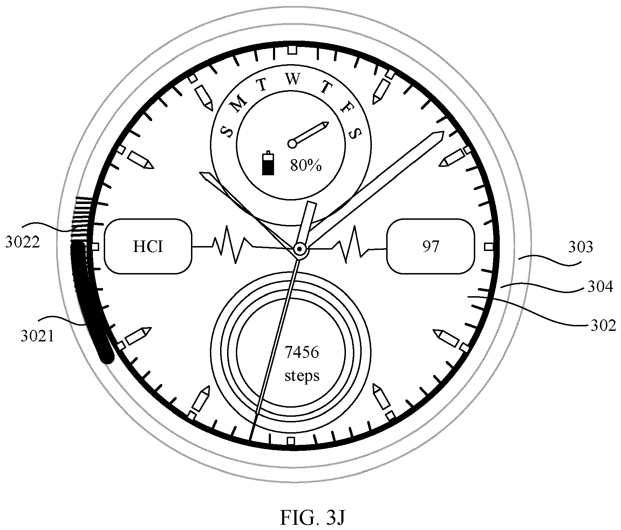

For example, FIG. 3J is a diagram of an example in which the electronic device 100 displays two partially overlapping schedule tags of different display forms.

As shown in FIG. 3J, a time period of a schedule tag 3021 is 8:00 to 9:00 p.m., a time period of a schedule tag 3022 is 8:36 to 9:24 p.m., and display forms of the schedule tag 3021 and the schedule tag 3022 are also different. It can be learned that a time period of a partially overlapping part of the schedule tag 3021 and the schedule tag 3022 is 8:36 to 9:00 p.m. Because the display form of the schedule tag 3021 is different from that of the schedule tag 3022, the user may intuitively observe that two different schedule tags are displayed in the overlapping manner in the time period from 8:36 to 9:00 p.m.

If two schedule tags that are displayed in the overlapping manner belong to schedule information of different types, but display forms of the two schedule tags are the same, or two schedule tags that are displayed in the overlapping manner belong to schedule information of a same type, the user cannot intuitively observe whether there is one schedule tag or two partially overlapping schedule tags. To distinguish between two partially overlapping schedule tags of the same display form, the electronic device 100 may highlight a schedule tag of an overlapping part in a specific manner.

The specific manner may be highlighting the schedule tag of the overlapping part in one or more manners such as a specific thickness, a specific color, blinking, or displaying a specific tag in a region of the schedule tag of the overlapping part.

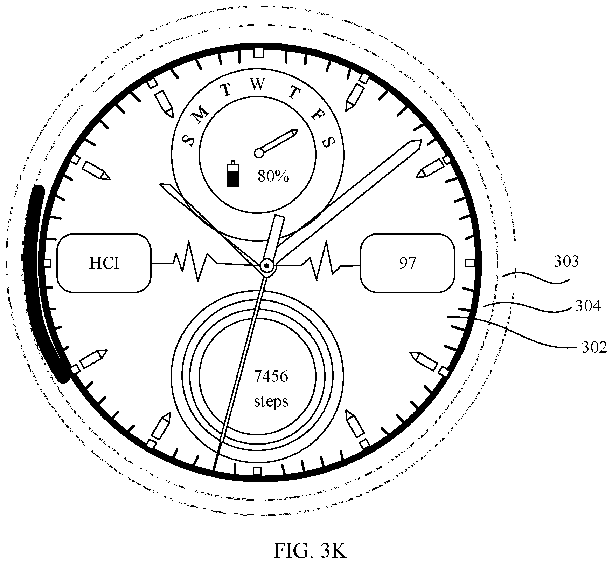

For example, FIG. 3K and FIG. 3L are diagrams of examples in which the electronic device 100 displays two partially overlapping schedule tags of a same display form.

As shown in FIG. 3K, there are actually two different schedule tags. One is a schedule tag in a time period from 8:00 to 9:00 p.m., and the other is a schedule tag in a time period from 9:00 to 9:36 p.m. However, display forms of the two schedule tags are the same. Therefore, the user intuitively observes, from the figure, that a schedule tag of an overlapping part is a schedule tag in a time period from 8:36 to 9:00 p.m.

To highlight the schedule tag of the overlapping part, the electronic device 100 displays, in a specific color in FIG. 3L, the schedule tag in the time period from 8:36 to 9:00 p.m. In this way, the user may intuitively observe that there are two schedule tags in the time period 8:00 to 9:36 p.m., and a time period of an overlapping part of the two schedule tags is 8:36 to 9:00 p.m.

8. After the electronic device 100 receives the operation 1 of the user and displays schedule tags on the "dual rings", when the electronic device 100 is in a screen-on state, the electronic device 100 displays the schedule tags on the "dual rings". When the user does not operate the electronic device 100 for a long time, the electronic device 100 is in a screen-off state. After the electronic device 100 is in the screen-off state, when the electronic device 100 receives a user operation and turns on a screen again, the electronic device 100 still displays the schedule tags on the "dual rings".

Alternatively, after the electronic device 100 receives the operation 1 of the user and displays schedule tags on the "dual rings", when the electronic device 100 is in a screen-on state, the electronic device 100 displays the schedule tags on the "dual rings". When the user does not operate the electronic device 100 for a long time, the electronic device 100 is in a screen-off state. After the electronic device 100 is in the screen-off state, when the electronic device 100 receives a user operation and turns on a screen again, the electronic device 100 no longer displays the "dual rings", or the electronic device 100 does not display the schedule tags on the "dual rings". The electronic device 100 needs to receive the operation 1 of the user again, so that the electronic device 100 can display the schedule tags on the "dual rings" again.

**Optionally, after the electronic device 100 displays, on the "dual rings", schedule tags corresponding to schedule information, the electronic device 100 may receive and respond to an operation 2 of the user, and display detailed content of a piece of specific schedule information.**

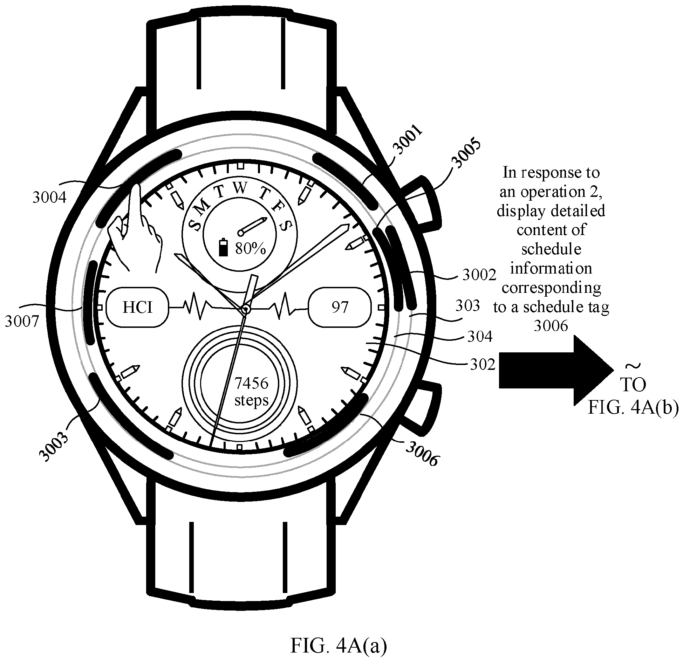

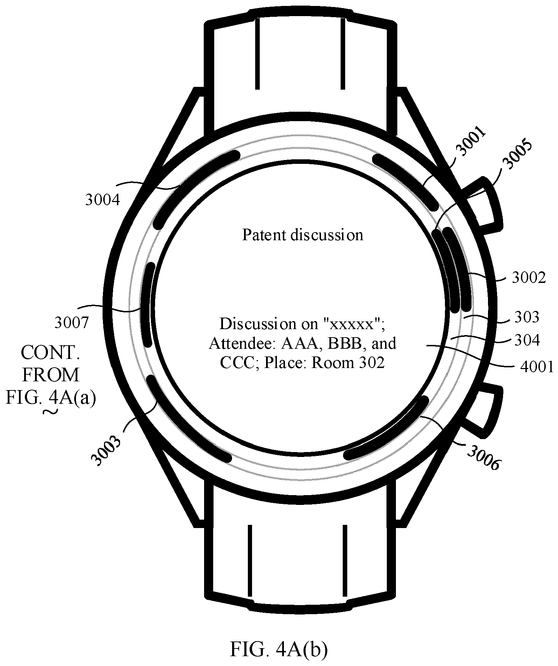

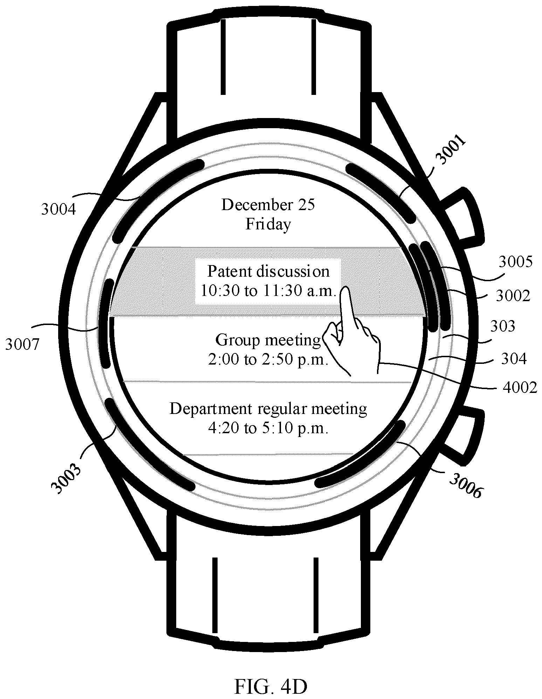

**FIG. 4A(a) to FIG. 4D** **are diagrams of examples of a group of UIs on which the electronic device 100 receives the operation 2 of the user and displays the detailed content of the piece of specific schedule information.**

**The operation 2 may be a trigger operation (for example, tap, double tap, or touch and hold) of the user on a specific schedule tag.**

As shown in FIG. 4A(a), FIG. 4A(a) shows schedule tags corresponding to schedule information in one day. The schedule tags include but are not limited to: a schedule tag 3001, a schedule tag 3002, a schedule tag 3003, a schedule tag 3004, a schedule tag 3005, a schedule tag 3006, and a schedule tag 3007.

When the user wants to view detailed content of schedule information corresponding to a specific schedule tag, the electronic device 100 may receive a trigger operation (for example, tap) of the user for the schedule tag, and in response to the trigger operation of the user, the electronic device 100 displays the detailed content of the schedule information corresponding to the schedule tag.

For example, as shown in FIG. 4A(a), when the user wants to view detailed content of schedule information corresponding to the schedule tag 3004, the electronic device 100 receives a trigger operation (for example, tap) of the user for the schedule tag 3004, and in response to the trigger operation of the user, the electronic device 100 displays a user interface 4001 shown in FIG. 4A(b).

In some embodiments, the schedule tag 3004 may also be referred to as a first reminder tag. Content displayed on the user interface 4001 may also be referred to as first schedule information. The trigger operation (for example, the tap) for the schedule tag 3004 may also be referred to as a second operation.

As shown in FIG. 4A(b), the user interface 4001 displays the detailed content of the schedule information corresponding to the schedule tag 3004. A theme of the schedule information corresponding to the schedule tag 3004 may be "patent discussion". The content displayed on the user interface 4001 includes "discussion on "xxxxx"; attendee: AAA, BBB, and CCC; place: Room 302".

Optionally, after the electronic device 100 receives the trigger operation of the user for the schedule tag 3004, the electronic device 100 highlights the schedule tag 3004, to prompt the user that the detailed content of the schedule information corresponding to the schedule tag 3004 is currently displayed. A manner in which the electronic device 100 highlights the schedule tag 3004 may include but is not limited to bold display of the schedule tag 3004, color-deepening display of the schedule tag 3004, periodic blinking of the schedule tag 3004, and the like.

Optionally, before the electronic device 100 receives the trigger operation (for example, the tap) of the user for the schedule tag 3004, and in response to the trigger operation of the user, the electronic device 100 displays the user interface 4001 shown in FIG. 4A(b), the electronic device 100 may display a schedule information list (displayed on a user interface 4002 shown in FIG. 4B(b)) in one day in a display region in which a user interface 302 is located.

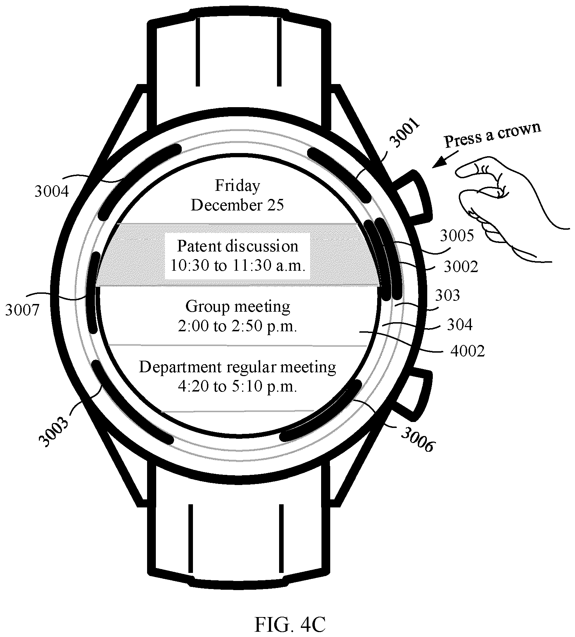

When the user wants to continue to view the detailed content of the piece of specific schedule information, the electronic device 100 may receive an input operation (for example, an input operation for corresponding schedule information in a schedule information list) of the user, and the electronic device 100 displays the user interface 4001 shown in FIG. 4A(b). For details, refer to subsequent detailed descriptions of FIG. 4C or FIG. 4D. Details are not described in this embodiment of this application.

**The operation 2 may alternatively be a trigger operation (for example, rotation or pressing) for the crown.**

After the electronic device 100 displays the "dual rings", the electronic device 100 may receive the trigger operation of the user for the crown, and display detailed content of schedule information.

FIG. 4B(a) to FIG. 4D are diagrams of examples in which the electronic device 100 receives the trigger operation of the user for the crown and displays the detailed content of the schedule information.

As shown in FIG. 4B(a), the electronic device 100 may receive a rotation operation (for example, a clockwise rotation operation) of the user for the crown, and the electronic device 100 displays the user interface 4002 shown in FIG. 4B(b). A schedule information list on the user interface 4002 includes several pieces of schedule information, for example, patent discussion, 10:30 to 11:30 a.m., group meeting, 2.00 to 2.50 p.m., and department regular meeting, 4:20-5: 10 p.m. The user interface 4002 further includes a current date, for example, the current date is Friday on December 25.

Optionally, in another embodiment, the user interface 4002 may not display the current date.

Optionally, after the electronic device 100 receives the rotation operation (for example, the clockwise rotation operation) of the user for the crown, as shown in FIG. 4B(b), the electronic device 100 may highlight a schedule tag (for example, the schedule tag 3004) closest to current time. The current time is 10:40 a.m., and a time interval in which the schedule tag 3004 is located is 10:00 to 11:20, so that the time interval in which the schedule tag 3004 is located is closest to the current time. A manner in which the electronic device 100 highlights the schedule tag 3004 may include but is not limited to bold display of the schedule tag 3004, color-deepening display of the schedule tag 3004, periodic blinking of the schedule tag 3004, and the like.

Then, the electronic device 100 may continue to receive a rotation operation (for example, a clockwise rotation operation) of the user for the crown. In response to the operation of rotating the crown by the user, the electronic device 100 displays a user interface 4003 shown in FIG. 4B(c). A difference between the user interface 4003 and the user interface 4002 lies in that the user interface 4003 further includes other undisplayed schedule information on the user interface 4002, and the other undisplayed schedule information on the user interface 4002 may be "group meals, start at 8:00 p.m.".

Optionally, the electronic device 100 may highlight the schedule tag 3007, and a manner in which the electronic device 100 highlights the schedule tag 3007 may include but is not limited to bold display of the schedule tag 3007, color-deepening display of the schedule tag 3007, periodic blinking of the schedule tag 3007, and the like.

Optionally, after the electronic device 100 displays the user interface 4002 shown in FIG. 4B(c), the electronic device 100 is not limited to rotating the crown to display more schedule information lists. The electronic device 100 may also receive an up-and-down slide operation of the user for the display, and display more schedule information lists.

Optionally, after the electronic device 100 displays the user interface 4002 shown in FIG. 4B(c), the electronic device 100 is not limited to rotating the crown to display more schedule information lists. The electronic device 100 may also receive a slide operation of the user for the "dual rings", and display more schedule information lists.

Optionally, the electronic device 100 may also receive an operation of the user for the crown, and display detailed content of schedule information corresponding to a specific schedule tag.

As shown in FIG. 4C, the electronic device 100 receives a pressing operation (for example, single press) of the user for the crown, and in response to the operation of pressing the crown by the user, the electronic device 100 displays the user interface 4001 shown in FIG. 4A(b), where the user interface 4001 is the detailed content of the schedule information corresponding to the schedule tag 3004.

Alternatively, as shown in FIG. 4D, the electronic device 100 receives an input operation (for example, a tap operation) of the user for the user interface 4001, and in response to the input operation of pressing the crown by the user, the electronic device 100 displays the user interface 4001 shown in FIG. 4A(b), where the user interface 4001 is the detailed content of the schedule information corresponding to the schedule tag 3004.

In some embodiments, the pressing operation of the user for the crown shown in FIG. 4C and the input operation (for example, the tap operation) that is of the user for the user interface 4001 and that is received by the electronic device 100 in FIG. 4D may also be referred to as third operations.

A "patent discussion" schedule item shown in FIG. 4D may also be referred to as a first schedule item.

An option corresponding to the "patent discussion" schedule item shown in FIG. 4D may also be referred to as a first option.

The operation 2 may alternatively be another operation, for example, a multi-finger slide operation, a multi-finger touch operation, a watch face touch and hold operation, a crown rotation operation, a triggering gesture, or a slide operation performed on the dual rings. A specific implementation of the operation 2 is not limited in embodiments of this application.

**Optionally, after the electronic device 100 displays, on the "dual rings", schedule tags corresponding to schedule information in a specific day, the electronic device 100 may receive and respond to an operation 3 of the user, and display, on the "dual rings", schedule tags corresponding to schedule information on different dates.**

**The operation 3 may be a two-finger slide operation performed on any location in the display region of the display of the electronic device 100, or the operation 3 may be a single-finger slide operation performed on a schedule tag display region of the display of the electronic device 100. The operation 3 may be another operation, for example, a multi-finger slide operation, a multi-finger touch operation, a watch face touch and hold operation, a crown rotation operation, a triggering gesture, or a wrist raising operation. A specific implementation of the operation 3 is not limited in embodiments of this application.**

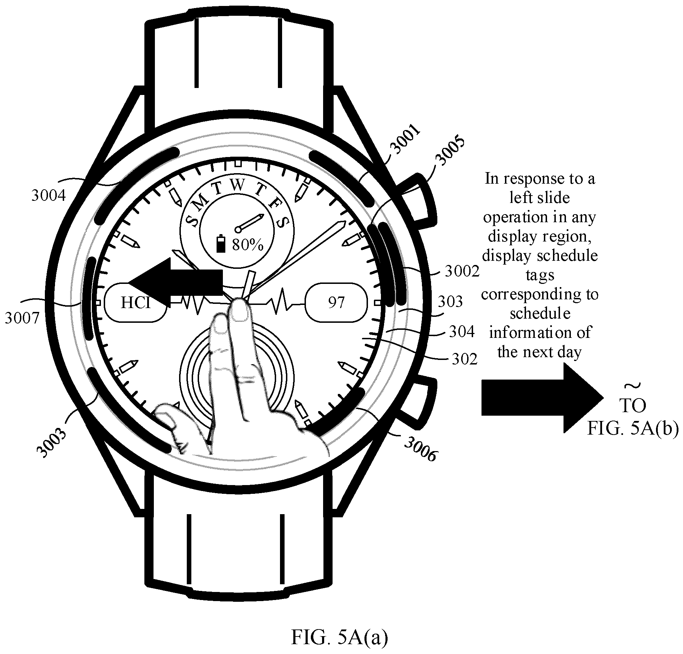

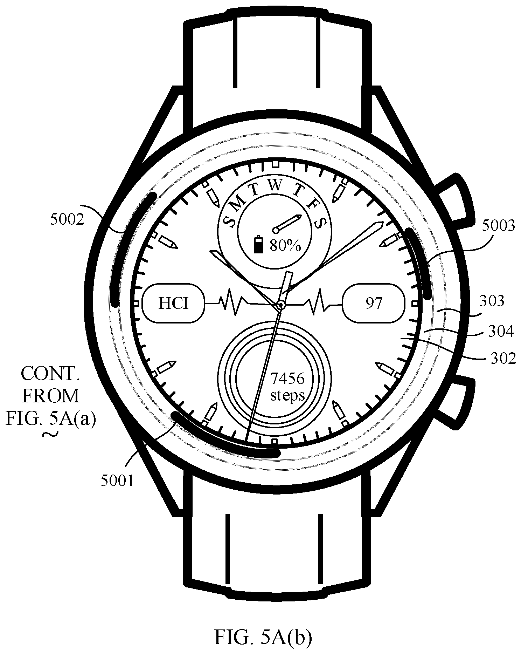

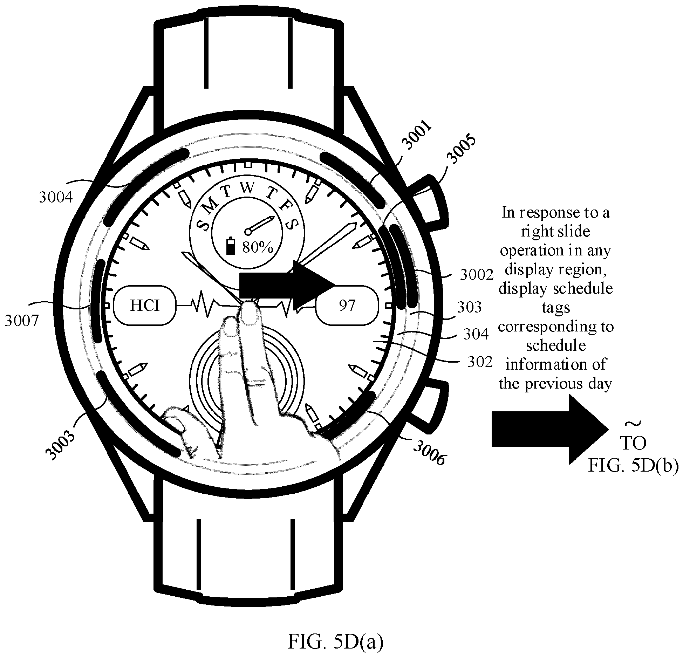

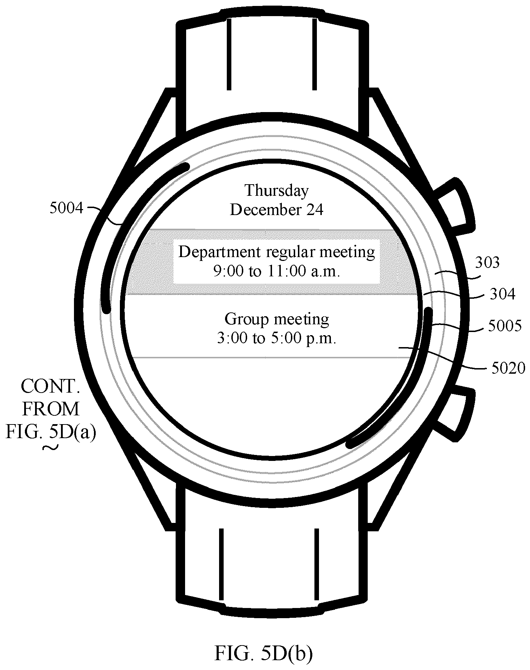

**FIG. 5A(a) to FIG. 5D(b)** **are diagrams of examples of a group of UIs on which the electronic device 100 receives the two-finger slide operation performed by the user on any location in the display region of the display of the electronic device 100, and displays, on the "dual rings", the schedule tags corresponding to the schedule information on different dates.**

FIG. 5A(a) and FIG. 5A(b) are a diagram in which the electronic device 100 displays, on the "dual rings", schedule tags corresponding to schedule information on December 26.

As shown in FIG. 5A(a), the electronic device 100 receives a two-finger left slide operation of the user for any location in the display region of the display of the electronic device 100, and the electronic device 100 displays a user interface shown in FIG. 5A(b).

FIG. 5A(a) shows a two-finger slide operation on a user interface 302, which is not limited to the two-finger slide operation on the user interface 302, and may also be a two-finger slide operation on a display region of the "dual-rings". In response to the two-finger slide operation, the electronic device 100 displays, on the "dual rings", schedule tags corresponding to schedule information of the next day. For example, if a current date is December 25, the schedule tags corresponding to the schedule information of the next day are the schedule tags corresponding to the schedule information on December 26.

As shown in FIG. 5A(b), the electronic device 100 still displays the user interface 302, but the ring 303 displays a schedule tag corresponding to schedule information from 00:00 to 12:00 on December 26, and the ring 304 displays a schedule tag corresponding to schedule information from 12:00 to 24:00 on December 26. The schedule tag corresponding to the schedule information from 00:00 to 12:00 on December 26 includes a schedule tag 5001 and a schedule tag 5002. The schedule tag corresponding to the schedule information from 12:00 to 24:00 on December 26 includes a schedule tag 5003.

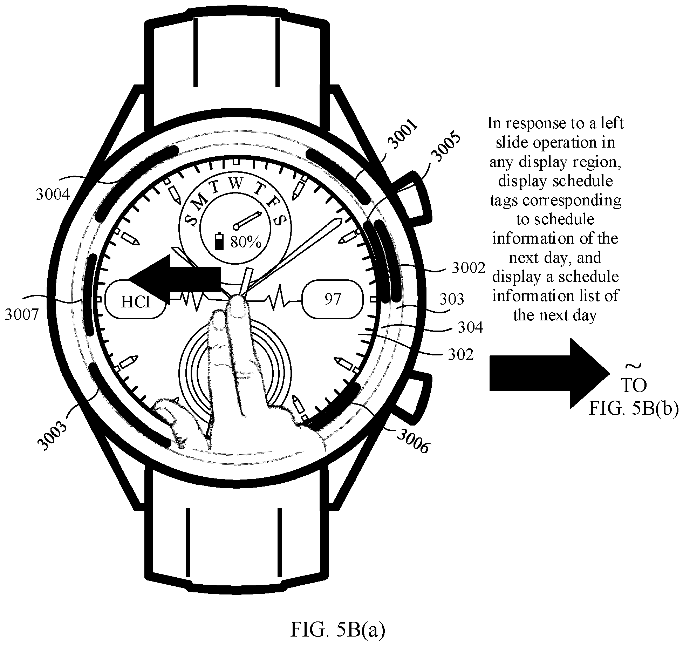

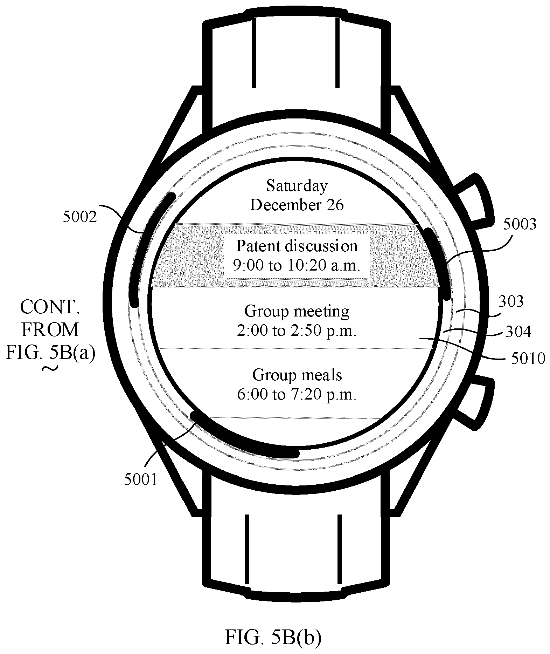

FIG. 5B(a) and FIG. 5B(b) are another diagram in which the electronic device 100 displays, on the "dual rings", schedule tags corresponding to schedule information on December 26.

As shown in FIG. 5B(a), the electronic device 100 receives a two-finger left slide operation of the user for any location in the display region of the electronic device 100, and the electronic device 100 displays a user interface shown in FIG. 5B(b).

As shown in FIG. 5B(b), the electronic device 100 displays a user interface 5010, and displays, in a display region outside the user interface 5010, the schedule tags corresponding to the schedule information on December 26. In addition to displaying a date, for example, Saturday, December 26, corresponding to the schedule tags displayed on the "dual rings", the user interface 5010 further displays a schedule information list on December 26. The schedule information list includes: patent discussion, 9:00 to 10:20 a.m., group meeting, 2.00 to 2.50 p.m., and group meals, 6:00 to 7:20 p.m. For the descriptions of the schedule tags corresponding to the schedule information on December 26, refer to the related descriptions of FIG. 5B(a) and FIG. 5B(b). Details are not described again in this embodiment of this application.

Optionally, the electronic device 100 may display only a schedule information list on February 26 on the user interface 5010, and does not display the date.

In some embodiments, a user interface other than the home screen 302 shown in FIG. 5A(b) or FIG. 5B(b) may also be referred to as a fifth interface.

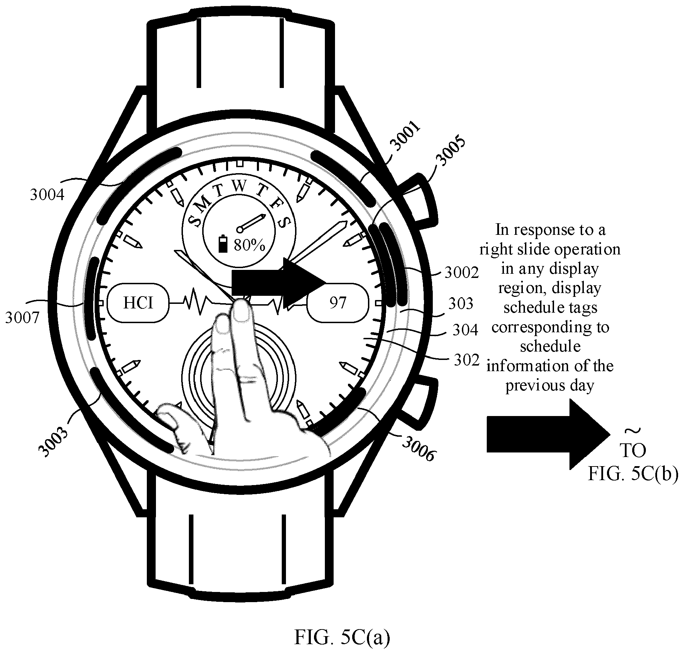

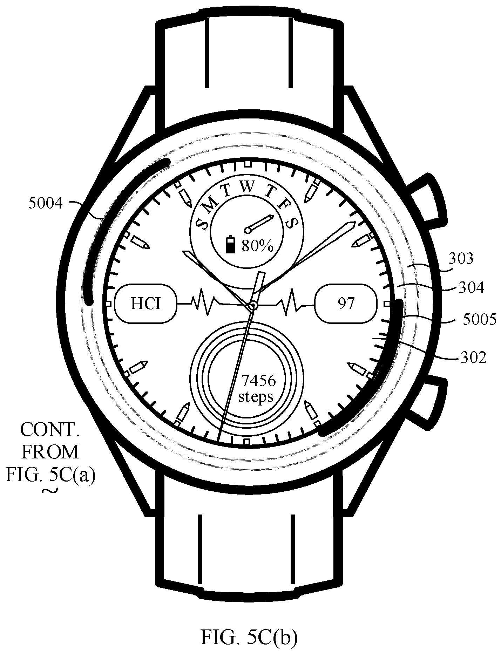

Similarly, as shown in FIG. 5C(a), the electronic device 100 receives a two-finger slide operation, for example, a two-finger right slide operation, of the user for any location in the display region of the electronic device 100, and the electronic device 100 displays, on the "dual rings", schedule tags corresponding to schedule information of the previous day. For example, if a current date is December 25, the schedule tags corresponding to the schedule information of the previous day are schedule tags corresponding to schedule information on December 24.

FIG. 5C(b) shows a diagram in which the electronic device 100 displays, on the "dual rings", the schedule tags corresponding to the schedule information on December 24.

As shown in FIG. 5C(b), the electronic device 100 still displays the user interface 302, but the ring 303 displays a schedule tag corresponding to schedule information from 00:00 to 12:00 on December 24, and the ring 304 displays a schedule tag corresponding to schedule information from 12:00 to 24:00 on December 24. The schedule tag corresponding to the schedule information from 00:00 to 12:00 on December 24 includes a schedule tag 5004. The schedule tag corresponding to the schedule information from 12:00 to 24:00 on December 24 includes a schedule tag 5005.

FIG. 5D(a) and FIG. 5D(b) are another diagram in which the electronic device 100 displays, on the "dual rings", schedule tags corresponding to schedule information on December 26.

As shown in FIG. 5D(a), the electronic device 100 receives a two-finger left slide operation of the user for any location in the display region of the electronic device 100, and the electronic device 100 displays a user interface shown in FIG. 5D(b).

As shown in FIG. 5D(b), the electronic device 100 displays a user interface 5020, and displays, in a display region outside the user interface 5020, the schedule tags corresponding to the schedule information on December 24. In addition to displaying a date, for example, Thursday, December 24, corresponding to the schedule tags displayed on the "dual rings", the user interface 5020 further displays a schedule information list on December 4. The schedule information list includes: department regular meeting, 9:00 to 11:00 a.m., and group meeting, 3:00 to 5:00 p.m.

Optionally, the electronic device 100 may display only a schedule information list on February 24 on the user interface 5020, and does not display the date.

It should be noted that the electronic device 100 may also receive a two-finger right slide operation of the user for any location in the display region of the display, and display the schedule tags corresponding to the schedule information of the next day (namely, on December 26). The electronic device 100 may also receive a two-finger left slide operation of the user for any location in the display region of the display, and display the schedule tags corresponding to the schedule information of the previous day (namely, on December 24). This is not limited in embodiments of this application.

In some embodiments, the two-finger slide operations, shown in FIG. 5A(a) to FIG. 5D(b), performed on any region of the display may also be referred to as fourth operations.

The schedule tag 5004 and the schedule tag 5005 shown in FIG. 5C(a) to FIG. 5D(b) may also be referred to as reminder tags corresponding to one or more schedule items on a second date. December 26 or December 24 may be referred to as the second date.

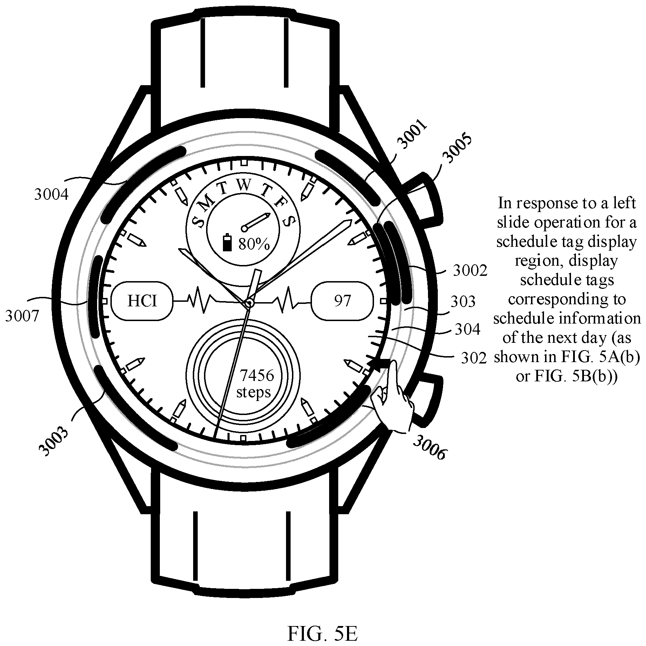

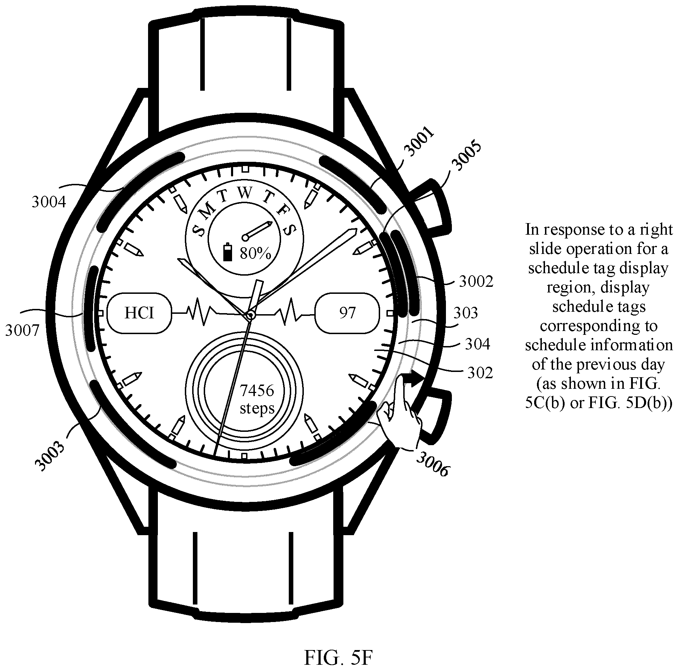

**FIG. 5E** **and** **FIG. 5F** **are diagrams of examples of another group of UIs on which the electronic device 100 receives the single-finger slide operation performed by the user on the schedule tag display region of the electronic device 100, and displays, on the "dual rings", the schedule tags corresponding to the schedule information on different dates.**

As shown in FIG. 5E, the electronic device 100 receives the single-finger slide operation (for example, a left slide operation) performed by the user on the schedule tag display region, and the electronic device 100 displays, on the "dual rings", schedule tags corresponding to schedule information of the next day (namely, on December 26), as shown on the user interface shown in FIG. 5A(b) or FIG. 5B(b).

As shown in FIG. 5F, the electronic device 100 receives the single-finger slide operation (for example, a right slide operation) performed by the user on the schedule tag display region, and the electronic device 100 displays, on the "dual rings", schedule tags corresponding to schedule information of the previous day (namely, December 24), as shown on the user interface shown in FIG. 5C(b) or FIG. 5D(b).

Optionally, the electronic device 100 may receive the single-finger slide operation of the user on the user interface 302, and in response to the single-finger slide operation of the user, the electronic device 100 displays other watch face content in the display region in which the user interface 302 is located.

It should be noted that the electronic device 100 may also receive the single-finger left slide operation performed by the user on the schedule tag display region, and display the schedule tags corresponding to the schedule information of the previous day (namely, on December 24); or the electronic device 100 may receive the single-finger right slide operation performed by the user on the schedule tag display region, and display the schedule tags corresponding to the schedule information of the next day (namely, on December 26). This is not limited in embodiments of this application.

In some embodiments, the single-finger slide operations, shown in FIG. 5E and FIG. 5F, performed on the third region may also be referred to as fourth operations.

**Optionally, after the electronic device 100 receives an operation 3 of the user, and displays, on the "dual rings", schedule tags corresponding to schedule information on a different date, if the electronic device 100 does not display the date corresponding to the schedule tags, after a period of time, the user views the schedule tags displayed on the "dual rings" again, and the user easily forgets a specific date on which the schedule tags corresponding to the schedule information are displayed on the "dual rings". To prompt the user of the specific date on which the schedule tags corresponding to the schedule information are displayed on the "dual rings", the electronic device 100 may display prompt information on the display, where the prompt information is used to prompt the user of the specific date on which the schedule tags corresponding to the schedule information are displayed on the "dual rings". The prompt information may be texts or an image.**

**The electronic device 100 may display the prompt information at any location of the display. This is not limited in embodiments of this application.**

For example, if no date corresponding to the schedule tags is displayed in FIG. 5B(b), to be specific, the date "Saturday, December 26" is not displayed on the user interface 5010, the electronic device 100 may display prompt information on the user interface shown in FIG. 5B(b) or on the user interface shown in FIG. 5A(b). The prompt information is used to prompt the user that the schedule tags displayed on the "dual rings" are schedule tags corresponding to schedule information on December 26. The prompt information may be texts, for example, "schedule tags on December 26".

For another example, if no date corresponding to the schedule tags is displayed in FIG. 5D(b), to be specific, the date "Thursday, December 24" is not displayed on the user interface 5020, the electronic device 100 may display prompt information on the user interface shown in FIG. 5D(b) or on the user interface shown in FIG. 5C(b). The prompt information is used to prompt the user that the schedule tags displayed on the "dual rings" are schedule tags corresponding to schedule information on December 24. The prompt information may be texts, for example, "schedule tags on December 24".

**Optionally, the electronic device 100 may display prompt information (first prompt information) in a non-continuous manner. Instead, the electronic device 100 displays the prompt information only after receiving an operation of the user, and after a period of time, the electronic device 100 does not display the prompt information. This can avoid interference to a displayed user interface because the electronic device 100 continuously displays the prompt information.**

For example, if the user wants to know a specific day in which the schedule tags corresponding to the schedule information are displayed on the "dual rings", the electronic device 100 may receive an operation of the user. The user operation may be a multi-finger slide operation, a multi-finger touch operation, a watch face touch and hold operation, a triggering gesture, a crown double-press operation, or the like. This is not limited in embodiments of this application. In response to the operation of the user, the electronic device 100 displays prompt information in a pop-up window, where the prompt information is used to prompt the user that the schedule tags corresponding to the schedule information on December 26 are displayed on the "dual rings". The prompt information may be texts, for example, "schedule tags on December 26".

**Optionally, after the electronic device 100 displays, on the "dual rings", the schedule tags corresponding to the schedule information in a specific day, the electronic device 100 may receive and respond to an operation 4 of the user, and the user may select the electronic device 100 to display, on the "dual rings", schedule tags corresponding to schedule information on a specific date.**

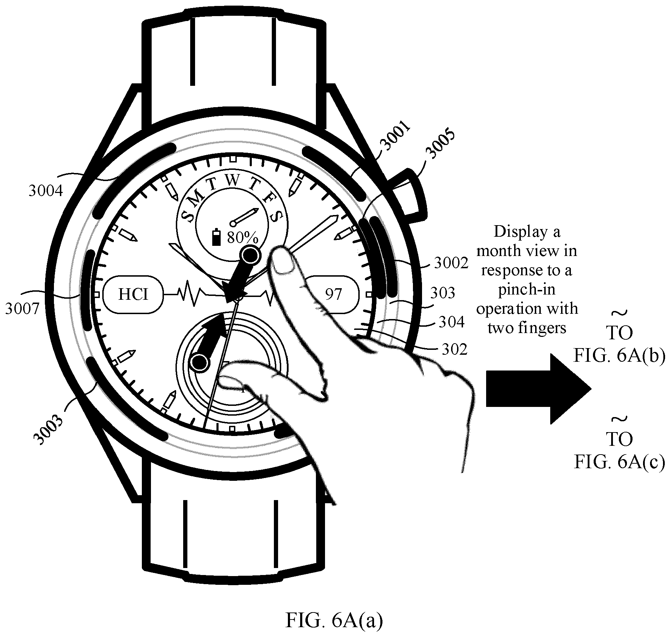

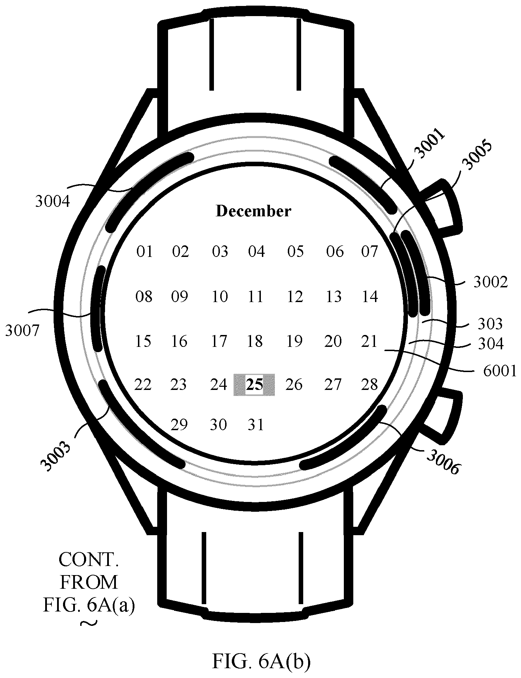

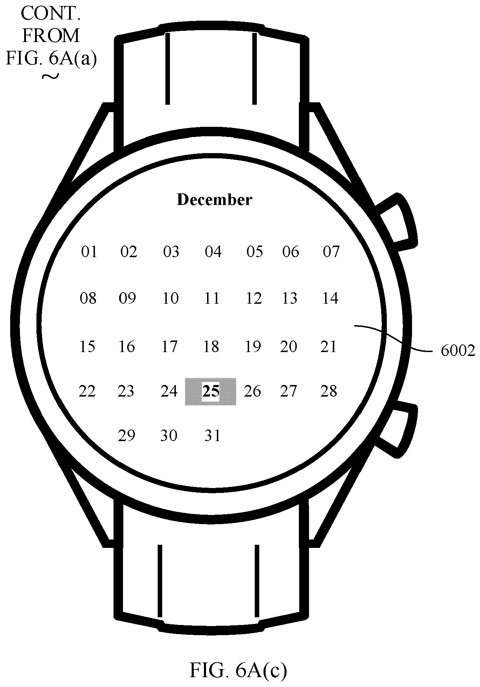

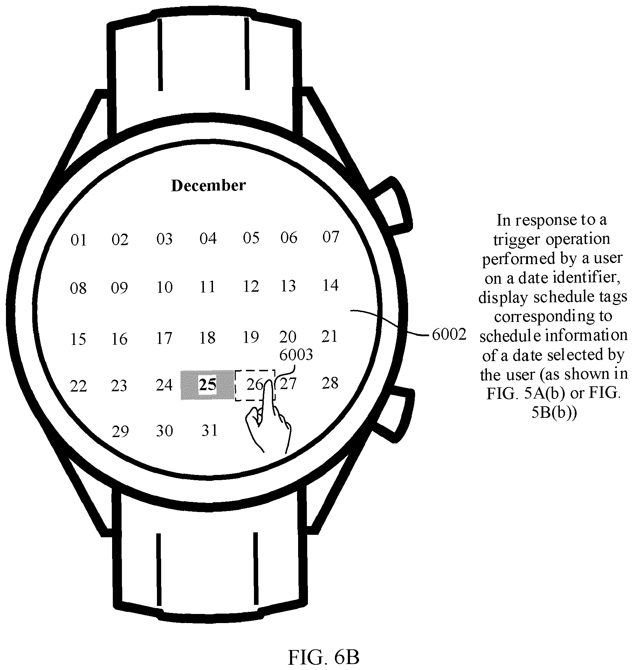

**FIG. 6A(a) to FIG. 6B** **are a group of diagrams of examples of displaying a month view by an electronic device 100 according to an embodiment of this application.**

FIG. 5A(a) to FIG. 5F show that the electronic device 100 may receive a slide operation of the user to switch to display schedule tags corresponding to schedule information on different dates. This manner is relatively convenient for switching to display schedule tags corresponding to schedule information of the previous day or the next day, and the user needs to slide only once to switch. However, if the user needs to switch to display schedule tags corresponding to schedule information a few days before or a few days after, the user needs to slide several times, so that the electronic device 100 can display schedule tags corresponding to schedule information on a specific date. In this way, user operations are complex.

Therefore, an embodiment of this application provides another method for switching to display a schedule tag corresponding to schedule information on a different date. Specifically, the electronic device 100 receives an operation 4 of the user, the electronic device 100 displays a month view, the electronic device 100 may allow selection of a specific date on the month view, and then the electronic device 100 may display, on the "dual rings", a schedule tag corresponding to schedule information on the selected date. In this way, user operations are convenient.

As shown in FIG. 6A(a), the operation 4 may be a pinch-in operation with two fingers on the display of the electronic device 100 after the electronic device 100 displays the "dual rings". The operation 4 may be another operation, for example, a multi-finger slide operation, a multi-finger touch operation, a watch face touch and hold operation, a crown rotation operation, a triggering gesture, or a wrist raising operation. A specific implementation of the operation 4 is not limited in embodiments of this application.

In response to the operation 4 of the user, the electronic device 100 displays a user interface shown in FIG. 6A(b). The user interface shown in FIG. 6A(b) includes a month view user interface 6001 and a schedule tag user interface. A display region in which the month view user interface 6001 is located is the same as a display region in which the user interface 302 is located.

The month view user interface 6001 displays a plurality of date identifiers in the current month (for example, December). Optionally, if the current date is December 25, the electronic device 100 may highlight an identifier of the current date (for example, a color is deepened).

Optionally, in response to the operation 4 of the user, the electronic device 100 may alternatively display a user interface shown in FIG. 6A(c). The user interface shown in FIG. 6A(c) includes only a month view user interface 6002, and does not include the schedule tag user interface.

A form of a user interface displayed after the electronic device 100 receives the operation 4 of the user is not limited in this embodiment of this application.

The user may select a date from the month view user interface 6001 or the month view user interface 6002, so that the electronic device 100 displays a schedule tag corresponding to schedule information on the date selected by the user.

For example, as shown in FIG. 6B, the electronic device 100 receives an input operation (for example, tap) of the user on a date identifier 6003, and in response to the input operation of the user, the electronic device 100 displays the schedule tags corresponding to the schedule information on December 26. Specifically, for descriptions of the schedule tags corresponding to the schedule information on December 26, refer to the foregoing descriptions of FIG. 5A(b) or FIG. 5B(b). Details are not described herein again in this embodiment of this application.

In some embodiments, the view user interface 6002 may also be referred to as a month view, and the date identifier 6003 shown in FIG. 6B may also be referred to as an identifier of a third date.

**Optionally, after the electronic device 100 displays, on the "dual rings", schedule tags corresponding to schedule information in a specific day, the electronic device 100 may receive and respond to an operation 5 of the user, and stop displaying the schedule tags corresponding to the schedule information.**

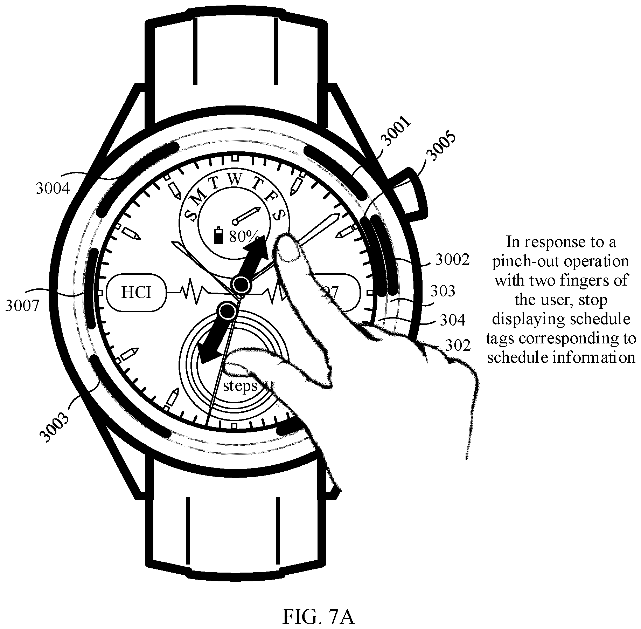

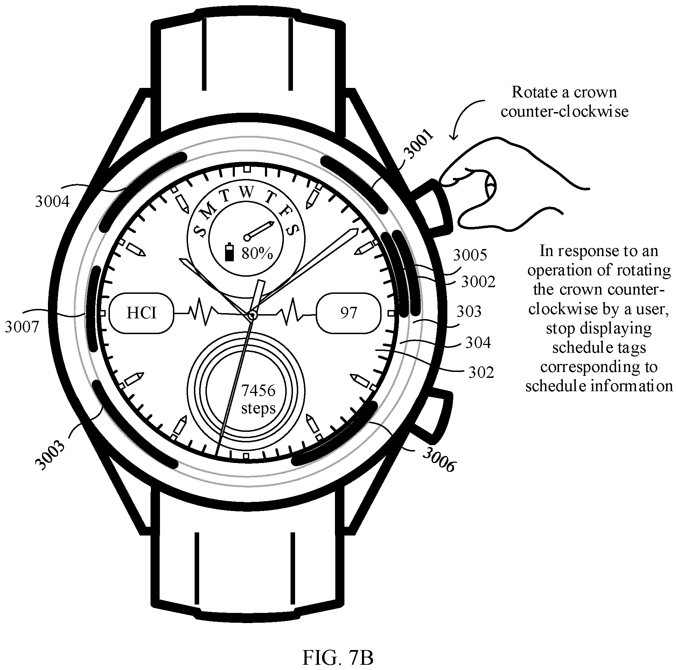

FIG. 7A and FIG. 7B are a group of diagrams of examples of stopping displaying a schedule tag corresponding to schedule information according to an embodiment of this application.

In some embodiments, the operation may also be referred to as a sixth operation.

The operation 5 may be a pinch-out operation that is performed with two fingers on the display shown in FIG. 7A, or the operation 5 may be a rotation operation (for example, a counter-clockwise rotation operation) for the crown shown in FIG. 7B. In another embodiment, the operation 5 may alternatively be a multi-finger slide operation, a multi-finger touch operation, a watch face touch and hold operation, a triggering gesture, a wrist raising operation, or the like. A specific implementation of the operation 5 is not limited in embodiments of this application.

In response to the operation 5 of the user, the electronic device 100 no longer displays the "dual rings", to be specific, the electronic device 100 stops displaying the ring 303 and the ring 304, the electronic device 100 stops displaying the schedule tags corresponding to the schedule information, and the electronic device 100 displays the user interface shown in FIG. 3A(a) to FIG. 3A(c), that is, the electronic device 100 displays only the home screen 301 in the display region of the display.

It should be noted that the operation 1 may alternatively be the pinch-out operation that is performed with two fingers on the display, and the operation 5 may alternatively be the pinch-in operation that is performed with two fingers on the display. The operation 1 may alternatively be the counter-clockwise rotation operation for the crown, and the operation 5 may alternatively be the clockwise rotation operation for the crown. This is not limited in embodiments of this application.

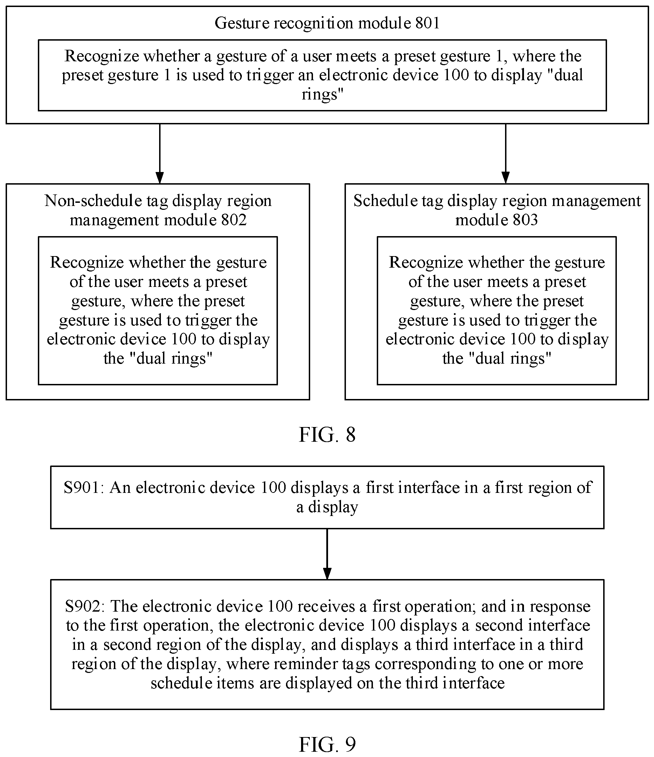

FIG. 8 is a diagram of an example of a functional module according to an embodiment of this application.

Functional modules shown in FIG. 8 include but are not limited to a gesture recognition module 801, a non-schedule tag display region management module 802, and a schedule tag display region management module 803.

The gesture recognition module 801 determines a gesture of a user based on data collected by an electronic device 100. The gesture of the user includes a gesture performed on the electronic device 100 and a gesture not directly performed on the electronic device 100. The gesture performed on the electronic device 100 includes but is not limited to a touchscreen gesture and an interaction gesture of a hardware button (for example, a crown) on the electronic device 100. The gesture not directly performed on the electronic device 100 includes but is not limited to data collected by a sensor on the electronic device 100, for example, acceleration data, gyroscope data, electromyography data, and pressure data.

The gesture recognition module 801 determines the gesture of the user based on data collected by the electronic device 100, and recognizes whether the gesture of the user meets a preset gesture 1, where the preset gesture 1 is used to trigger the electronic device 100 to display "dual rings". The preset gesture 1 includes but is not limited to a pinch-in operation with two fingers, a crown rotation operation, and the like. A specific implementation of the preset gesture 1 is not limited in embodiments of this application.

After the gesture recognition module 801 determines that the gesture of the user meets the preset gesture 1, the gesture recognition module 801 sends an instruction 1 to the non-schedule tag display region management module 802. After the non-schedule tag display region management module 802 receives the instruction 1, the non-schedule tag display region management module 802 displays a watch face element or displays a schedule information list in a non-schedule tag display region.

Similarly, the gesture recognition module 801 sends an instruction 2 to the schedule tag display region management module 803. After the schedule tag display region management module 803 receives the instruction 2, the schedule tag display region management module 803 displays the "dual rings" in a schedule tag display region, obtains schedule information in one day, and displays the schedule information on the "dual rings" in a form of a schedule tag in a time sequence. The form of the schedule tag includes but is not limited to a shape, a size, a color, brightness, a state, and the like. Display forms of schedule tags corresponding to different types of schedule information are different, and display forms of schedule tags corresponding to a same type of schedule information that has different impact degrees may also be different.

A display region of a display on the electronic device 100 includes the schedule tag display region and the non-schedule tag display region.

After the schedule tag display region management module 803 displays a schedule tag corresponding to schedule information on the "dual rings", the gesture recognition module 801 further needs to monitor a gesture of the user in real time, and determine whether the gesture of the user is a preset gesture of another function, for example, a gesture of exiting display of the "dual rings", or a gesture of switching to display schedule tags corresponding to schedule information on different dates.

For example, when the gesture recognition module 801 recognizes that the gesture of the user is the gesture of exiting the display of the "dual-rings", the gesture recognition module 801 sends an instruction 3 to the non-schedule tag display region management module 802. After the non-schedule tag display region management module 802 receives the instruction 3, the non-schedule tag display region management module 802 displays the watch face element in a complete display region of the display.

Similarly, the gesture recognition module 801 sends an instruction 4 to the schedule tag display region management module 803, and after the schedule tag display region management module 803 receives the instruction 4, the schedule tag display region management module 803 stops displaying the "dual rings".

For example, when the gesture recognition module 801 recognizes that the gesture of the user is the gesture of switching to display schedule tags corresponding to schedule information on different dates, in some embodiments, elements displayed in the non-schedule tag display region remain unchanged, and the gesture recognition module 801 does not need to send an instruction to the non-schedule tag display region management module 802. In another embodiment, a schedule information list corresponding to another date is displayed in the non-schedule tag display region. In this case, the gesture recognition module 801 sends an instruction 5 to the non-schedule tag display region management module 802. After the non-schedule tag display region management module 802 receives the instruction 5, the non-schedule tag display region management module 802 displays the schedule information list corresponding to the another date in the non-schedule tag display region.

Similarly, the gesture recognition module 801 sends an instruction 6 to the schedule tag display region management module 803. After the schedule tag display region management module 803 receives the instruction 6, the schedule tag display region management module 803 displays, on the "dual rings", a schedule tag corresponding to the schedule information on another date.

It should be noted that the foregoing one or more functional modules may independently implement a preset function, or two or more of the foregoing functional modules may be combined to implement the preset function.

FIG. 9 is a flowchart of an example of a method according to an embodiment of this application.

S901: An electronic device 100 displays a first interface in a first region of a display.

The electronic device 100 is a wearable device like a smartwatch or a Bluetooth watch. A shape of the display of the electronic device 100 is any one of a circle, an ellipse, a square, a rectangle, a diamond, or a trapezoid.

The first region may be a display region in which the home screen 301 shown in FIG. 3A(a) is located, or may be a complete display region of the display of the electronic device 100.

The first interface may be the home screen 301 shown in FIG. 3A(a). The first interface may alternatively be another user interface, and is not limited to the home screen 301. A display form of the first interface is not limited in this embodiment of this application.

S902: The electronic device 100 receives a first operation, and in response to the first operation, the electronic device 100 displays a second interface in a second region of the display, and displays a third interface in a third region of the display, where reminder tags corresponding to one or more schedule items are displayed on the third interface.

The first operation may be a pinch-in operation that is performed on the first interface (for example, a pinch-in operation that is performed with two fingers on the first interface, shown in FIG. 3A(a)), or the first operation is an operation performed on a crown of the electronic device 100 (for example, a rotation operation performed on the crown of the electronic device 100 shown in FIG. 3A(b)).

The second region may be a display region in which the home screen 302 shown in FIG. 3A(c) is located, and the third region may be the display region other than the display region in which the home screen 302 shown in FIG. 3A(c) is located.

Optionally, content displayed on the second interface is the same as content displayed on the first interface, and a size of the second interface is less than a size of the first interface. Alternatively, content displayed on the second interface is different from content displayed on the first interface, and a size of the second interface is less than a size of the first interface.

The second interface may be the home screen 302 shown in FIG. 3A(c), or the second interface may be another user interface (for example, a user interface displaying a schedule information list on a first date, for example, the user interface 4002 shown in FIG. 4B(b)). A display form of the second interface is not limited in this embodiment of this application.

The third interface is a user interface other than the home screen 302 shown in FIG. 3A(c), namely, the user interface that includes the ring 303 and the ring 304 shown in FIG. 3A(c).

The second region and the first region have a same central point, the third region is a ring region surrounding a periphery of the second region, and the third region does not overlap the second region. The first region includes the second region and the third region.

The schedule item may include a to-do list, travel information, meeting information, a weather condition, reminder information, group meals information, and the like. Display forms of the reminder tags corresponding to the one or more schedule items include but are not limited to a graphic element, brightness, a color, a shape, a size, shadow, a transparency, and the like. The graphic element includes but is not limited to an arc line, a geometric pattern, a slash, and the like.

By using the method, an interaction interface for viewing all-day schedule information more quickly, more conveniently, and more comprehensively may be provided for a user, so that the user can properly arrange time, and simultaneously, the user is provided with easier operations and more user-friendly interaction experience.

Optionally, that reminder tags corresponding to one or more schedule items are displayed on the third interface specifically includes: Reminder tags corresponding to one or more schedule items on the first date are displayed on a first ring and/or a second ring of the third interface.

The reminder tags corresponding to the one or more schedule items may be the schedule tag 3001, the schedule tag 3002, the schedule tag 3003, the schedule tag 3004, the schedule tag 3005, the schedule tag 3006, and the schedule tag 3007 shown in FIG. 3D.

The first ring may be the ring 303 shown in FIG. 3A(c), and the second ring may be the ring 304 shown in FIG. 3A(c).

Optionally, in some embodiments, the electronic device 100 may not display the first ring and/or the second ring, but directly display a schedule item in one day at a corresponding location in a form of a schedule tag based on time corresponding to each schedule item. In this way, the user may directly view one or more schedule items in one day through the first ring and/or the second ring.

Optionally, that reminder tags corresponding to one or more schedule items on the first date are displayed on a first ring and/or a second ring of the third interface specifically includes: Reminder tags corresponding to one or more schedule items from 00:00 to 12:00 on the first date are displayed on the first ring of the third interface; and/or reminder tags corresponding to one or more schedule items from 12:00 to 24:00 on the first date are displayed on the second ring of the third interface. In this way, schedule items in one day are divided into task items in two time periods based on time, to help the user view the schedule items in one day.

The reminder tags corresponding to the one or more schedule items from 00:00 to 12:00 on the first date may be the schedule tag 3001, the schedule tag 3002, the schedule tag 3003, and the schedule tag 3004 shown in FIG. 3D.

The reminder tags corresponding to the one or more schedule items from 12:00 to 24:00 on the first date may be the schedule tag 3005, the schedule tag 3006, and the schedule tag 3007 shown in FIG. 3D.

Optionally, a display location of the reminder tag corresponding to the schedule item on the first ring and/or the second ring indicates time corresponding to the schedule item. The time corresponding to the schedule item includes start time and end time. In this way, the user cannot only view the one or more schedule items in one day, but also intuitively view start time and end time of each schedule item, so that the user can view an interaction interface of all-day schedule information more conveniently and more comprehensively, to help the user properly arrange time.

Optionally, the electronic device may display a timescale on the display to help the user view the time (the start time or the end time) corresponding to the schedule item displayed on the first ring and/or the second ring. In this way, the user may clearly view, through the timescale, duration occupied by the schedule item.

Optionally, display forms of reminder tags corresponding to different types of schedule items are different, and the display forms of the reminder tags include one or more of the following elements: a graph, brightness, a color, a shape, a size, a shadow, and transparency. In this way, the user may intuitively observe which types of schedule items currently exist.

Optionally, display forms of schedule items of the same type but different events may also be different. In this way, the user may intuitively observe relatively important schedule information. For details, refer to related descriptions in the embodiment shown in FIG. 3G. Details are not described again in this embodiment of this application.

Optionally, the reminder tags corresponding to the one or more schedule items include a first reminder tag corresponding to a first schedule item; and after that the electronic device displays a third interface in a third region of the display, the method further includes: The electronic device receives a second operation for the first reminder tag; and the electronic device displays, in the second region of the display in response to the second operation, first schedule information corresponding to the first schedule item.

The first reminder tag may be the schedule tag 3004 shown in FIG. 4A(a).

The first schedule information may be the content displayed on the user interface 4001 shown in FIG. 4A(b).

The second operation may be a tap operation for the first reminder tag (for example, the trigger operation for the schedule tag 3004 shown in FIG. 4A(a)).

In this way, the reminder tag on the first ring and/or the second ring may receive a trigger operation of the user, and detailed content of the schedule item corresponding to the reminder tag is displayed on the display.

Optionally, the second interface includes options of the one or more schedule items, and the options of the one or more schedule items include a first option corresponding to the first schedule item; and after that the electronic device displays a third interface in a third region of the display, the method further includes: The electronic device receives a third operation for the first option; and the electronic device displays, in the second region of the display in response to the third operation, first schedule information corresponding to the first schedule item. The third operation may be a tap operation for the first option (for example, a tap operation of the user for the first option is received through a touchscreen), or the third operation may be an operation of operating the crown (for example, pressing the crown).

The first schedule item may be the schedule item "patent discussion" shown in FIG. 4C.

The first option may be an option corresponding to the schedule item "patent discussion" shown in FIG. 4C.

The third operation may be a tap operation for the first option (for example, a trigger operation for the option corresponding to the schedule item "patent discussion" shown in FIG. 4D). The third operation may alternatively be a pressing operation for the crown shown in FIG. 4C.

In this way, one or more schedule items displayed on a watch face may receive a trigger operation of the user, and detailed content of the schedule item is displayed on the display.

Optionally, after that the electronic device displays a third interface in a third region of the display, the method further includes: The electronic device receives a fourth operation; and the electronic device displays a fourth interface in the third region of the display in response to the fourth operation, where reminder tags corresponding to one or more schedule items on a second date are displayed on a first ring and/or a second ring of the fourth interface, and the second date is one day before or after the first date.

The fourth operation may be a two-finger slide operation that is shown in FIG. 5A(a) to FIG. 5D(b) and that is performed on any region of the display, or may be a single-finger slide operation that is shown in FIG. 5E and FIG. 5F and that is performed on the third region.

The reminder tags corresponding to the one or more schedule items on the second date may be the schedule tag 5004 and the schedule tag 5005 shown in FIG. 5C(b) and FIG. 5D(b).

In this way, the user may control the electronic device to display schedule tags corresponding to one or more schedule items on different dates.

Optionally, after that the electronic device displays a fourth interface in a third region of the display, the method further includes: The electronic device displays first prompt information, where the first prompt information is used to prompt that the reminder tags are the reminder tags corresponding to the one or more schedule items on the second date. In this way, the electronic device outputs the first prompt information, to avoid that after switching a date, the user does not know a specific date on which reminder tags corresponding to one or more schedule items are displayed in the third region.

Optionally, after that the electronic device displays a third interface in a third region of the display, the method further includes: the electronic device receives a fifth operation; the electronic device displays a month view in the first region or the second region in response to the fifth operation, where the month view displays identifiers of a plurality of dates; and the electronic device receives and responds to an input operation for an identifier of a third date on the month view, and the electronic device displays a fifth interface in the third region of the display, where reminder tags corresponding to one or more schedule items on the third date are displayed on a first ring and/or a second ring of the fifth interface.

The month view may be the month view user interface 6002 shown in FIG. 6B. The identifier of the third date may be the date identifier 6003 shown in FIG. 6B.

The fifth interface may be the user interface other than the home screen 302 shown in FIG. 5A(b) or FIG. 5B(b).

In this way, the user can quickly select any date, so that the electronic device displays, in the third region, reminder tags corresponding to one or more schedule items on the date selected by the user, to improve operation efficiency of the user.

Optionally, after that the electronic device receives a fifth operation, the method further includes: The electronic device displays a sixth interface or the first interface in the second region of the display, where the sixth interface includes options of the one or more schedule items on the third date. In this way, after the user selects a specific date, the first interface may be displayed in a display region (namely, the second region) in which the watch face is located, or a schedule information list on the date selected by the user may be displayed.

Optionally, after that the electronic device displays a third interface in a third region of the display, the method further includes: The electronic device receives a sixth operation; and in response to the sixth operation, the electronic device stops displaying the third interface in the third region of the display, and displays the first interface in the first region. The sixth operation is an operation of enabling the electronic device to stop displaying the first ring and/or the second ring. The sixth operation may be a pinch-out operation that is performed on the first interface (for example, a pinch-out operation that is performed with two fingers on the first interface shown in FIG. 7A), or the sixth operation is an operation performed on the crown of the electronic device (for example, a rotation operation performed on the crown of the electronic device shown in FIG. 7B). In the sixth operation and the first operation, the crown is rotated in opposite directions.

The implementations of this application may be randomly combined to achieve different technical effect.

All or some of the foregoing embodiments may be implemented by software, hardware, firmware, or any combination thereof. When the software is used to implement the foregoing embodiments, all or some of the foregoing embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in the embodiments may be implemented by a computer program instructing related hardware. The program may be stored in a computer-readable storage medium. When the program is run, the procedures of the methods in the embodiments may be performed. The storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A display method, wherein the method comprises:
displaying, by an electronic device, a first interface in a first region of a display;
receiving, by the electronic device, a first operation; and
in response to the first operation, displaying, by the electronic device, a second interface in a second region of the display, and displaying a third interface in a third region of the display, wherein reminder tags corresponding to one or more schedule items are displayed on the third interface, wherein
the second region and the first region have a same central point, the third region is a ring region surrounding a periphery of the second region, and the third region does not overlap the second region.

2. The method according to claim 1, wherein that reminder tags corresponding to one or more schedule items are displayed on the third interface specifically comprises:
reminder tags corresponding to one or more schedule items on a first date are displayed on a first ring and/or a second ring of the third interface.

3. The method according to claim 2, wherein that reminder tags corresponding to one or more schedule items on a first date are displayed on a first ring and/or a second ring of the third interface specifically comprises:
reminder tags corresponding to one or more schedule items from 00:00 to 12:00 on the first date are displayed on the first ring of the third interface; and/or
reminder tags corresponding to one or more schedule items from 12:00 to 124:00 on the first date are displayed on the second ring of the third interface.

4. The method according to claim 2 or 3, wherein a display location of the reminder tag corresponding to the schedule item on the first ring and/or the second ring indicates time corresponding to the schedule item.

5. The method according to any one of claims 1 to 4, wherein the first operation is a pinch-in operation that is performed on the first interface, or the first operation is an operation performed on a crown of the electronic device.

6. The method according to any one of claims 1 to 5, wherein the first region is a complete display region of the display, and the first region comprises the second region and the third region.

7. The method according to any one of claims 1 to 6, wherein content displayed on the second interface is the same as content displayed on the first interface, and a size of the second interface is less than a size of the first interface.

8. The method according to any one of claims 1 to 6, wherein content displayed on the second interface is different from content displayed on the first interface, and a size of the second interface is less than a size of the first interface.

9. The method according to any one of claims 1 to 8, wherein display forms of reminder tags corresponding to different types of schedule items are different, and the display forms of the reminder tags comprise one or more of the following elements: a graph, brightness, a color, a shape, a size, a shadow, and transparency.

10. The method according to any one of claims 1 to 9, wherein the reminder tags corresponding to the one or more schedule items comprise a first reminder tag corresponding to a first schedule item; and after the displaying, by the electronic device, a third interface in a third region of the display, the method further comprises:
receiving, by the electronic device, a second operation for the first reminder tag; and
displaying, by the electronic device in the second region of the display in response to the second operation, first schedule information corresponding to the first schedule item.

11. The method according to claim 8, wherein the second interface comprises options of the one or more schedule items, and the options of the one or more schedule items comprise a first option corresponding to the first schedule item; and after the displaying, by the electronic device, a third interface in a third region of the display, the method further comprises:
receiving, by the electronic device, a third operation for the first option; and
displaying, by the electronic device in the second region of the display in response to the third operation, first schedule information corresponding to the first schedule item.

12. The method according to claim 11, wherein the display is a touchscreen; and the receiving, by the electronic device, a third operation for the first option specifically comprises:
receiving, by the electronic device, the third operation for the first option through the touchscreen.

13. The method according to claim 10, wherein the electronic device further comprises the crown; and the receiving, by the electronic device, a third operation for the first option specifically comprises:
receiving, by the electronic device, the third operation for the first option through the crown.

14. The method according to any one of claims 2 to 4, wherein after the displaying, by the electronic device, a third interface in a third region of the display, the method further comprises:
receiving, by the electronic device, a fourth operation; and
displaying, by the electronic device, a fourth interface in the third region of the display in response to the fourth operation, wherein reminder tags corresponding to one or more schedule items on a second date are displayed on a first ring and/or a second ring of the fourth interface, and the second date is one day before or after the first date.

15. The method according to claim 14, wherein after the displaying, by the electronic device, a fourth interface in the third region of the display, the method further comprises:
displaying, by the electronic device, first prompt information, wherein the first prompt information is used to prompt that the reminder tags are the reminder tags corresponding to the one or more schedule items on the second date.

16. The method according to any one of claims 1 to 15, wherein after the displaying, by the electronic device, a third interface in a third region of the display, the method further comprises:
receiving, by the electronic device, a fifth operation;
displaying, by the electronic device, a month view in the first region or the second region in response to the fifth operation, wherein the month view displays identifiers of a plurality of dates; and
receiving and responding to, by the electronic device, an input operation for an identifier of a third date on the month view, and displaying, by the electronic device, a fifth interface in the third region of the display, wherein reminder tags corresponding to one or more schedule items on the third date are displayed on a first ring and/or a second ring of the fifth interface.

17. The method according to claim 16, wherein after the receiving, by the electronic device, a fifth operation, the method further comprises:
displaying, by the electronic device, a sixth interface or the first interface in the second region of the display, wherein the sixth interface comprises options of the one or more schedule items on the third date.

18. The method according to any one of claims 1 to 17, wherein after the displaying, by the electronic device, a third interface in a third region of the display, the method further comprises:
receiving, by the electronic device, a sixth operation; and
in response to the sixth operation, stopping, by the electronic device, displaying the third interface in the third region of the display, and displaying the first interface in the first region.

19. The method according to any one of claims 1 to 18, wherein the electronic device is a wearable device; and
a shape of the display of the electronic device is any one of a circle, an ellipse, a square, a rectangle, a diamond, or a trapezoid.

20. An electronic device, wherein the electronic device comprises one or more processors and one or more memories; the one or more memories are coupled to the one or more processors, the one or more memories are configured to store computer program code, and the computer program code comprises computer instructions; and the one or more processors invoke the computer instructions, so that the electronic device performs the method according to any one of claims 1 to 19.

21. A computer-readable storage medium, configured to store computer instructions, wherein when the computer instructions are run on an electronic device, the electronic device is enabled to perform the method according to any one of claims 1 to 19.

22. A computer program product, wherein when the computer program product is run on an electronic device, the electronic device is enabled to perform the method according to any one of claims 1 to 19.
